Europäisches Patentamt

European Patent Office

Office européen des brevets

(19)

(11) **EP 1 422 850 A1**

(12) **EUROPEAN PATENT APPLICATION**
published in accordance with Art. 158(3) EPC

(43) Date of publication:
26.05.2004 Bulletin 2004/22

(51) Int Cl.⁷: $H04J\ 11/00$

(21) Application number: 02758791.4

(86) International application number:
PCT/JP2002/008048

(22) Date of filing: 07.08.2002

(87) International publication number:
WO 2003/021833 (13.03.2003 Gazette 2003/11)

(84) Designated Contracting States:
AT BE BG CH CY CZ DE DK EE ES FI FR GB GR
IE IT LI LU MC NL PT SE SK TR
Designated Extension States:
AL LT LV MK RO SI

(30) Priority: 28.08.2001 JP 2001258615
19.03.2002 JP 2002077102
14.05.2002 JP 2002138714

(71) Applicant: MATSUSHITA ELECTRIC INDUSTRIAL
CO., LTD.
Kadoma-shi, Osaka 571-8501 (JP)

(72) Inventors:
• UESUGI, Mitsuru
Yokosuka-shi, Kanagawa 238-0048 (JP)
• OTA, Eiji, c/o Tokyo Denpan Sekkei Inc.,
Ota-ku, Tokyo 145-0063 (JP)

(74) Representative: Grünecker, Kinkeldey,
Stockmair & Schwanhäusser Anwaltssozietät
Maximilianstrasse 58
80538 München (DE)

(54) **MULTI-PASS INTERFERENCE REMOVAL APPARATUS AND MULTI-PASS INTERFERENCE REMOVAL METHOD**

(57) A replica generating section 109 creates replicas of path #3 and path #4 for effective symbol A. A convolutional operation section 111 finds an interference part by performing convolution of the impulse response in the path #3 and path #4 replicas. This interference part is output to a subtraction section 104. In the subtraction section 104, the interference part is subtracted from the next OFDM symbol. That is to say, an interference part is found using effective symbol A, and that interference part (the part that leaks into the range in which an FFT of effective symbol B is performed) is eliminated from effective symbol B. By this means, the occurrence of distortion in effective symbol B can be prevented.

FIG.5

EP 1 422 850 A1

**Description**

Technical Field

The present invention relates to a multipath interference canceling apparatus and multipath interference canceling method to be used in a digital radio communication system.

Background Art

Recently, there has been a demand for high-speed transmission in digital radio communications. For this purpose, transmission with a high symbol rate is necessary. When such high-symbol-rate transmission is implemented with a single carrier, interference occurs even on paths with a slight delay time difference, resulting in degradation of transmission characteristics.

Thus, in digital radio communications, multipath countermeasures have been strengthened by using multicarrier systems and lowering the symbol rate per carrier. In this case, spectral efficiency can be improved by using OFDM (Orthogonal Frequency Division Multiplexing) for multicarrier implementation.

As OFDM has a low per-carrier symbol rate, strong resistance to multipath effects is provided simply by using OFDM. Resistance to multipath effects is further strengthened by introducing guard intervals.

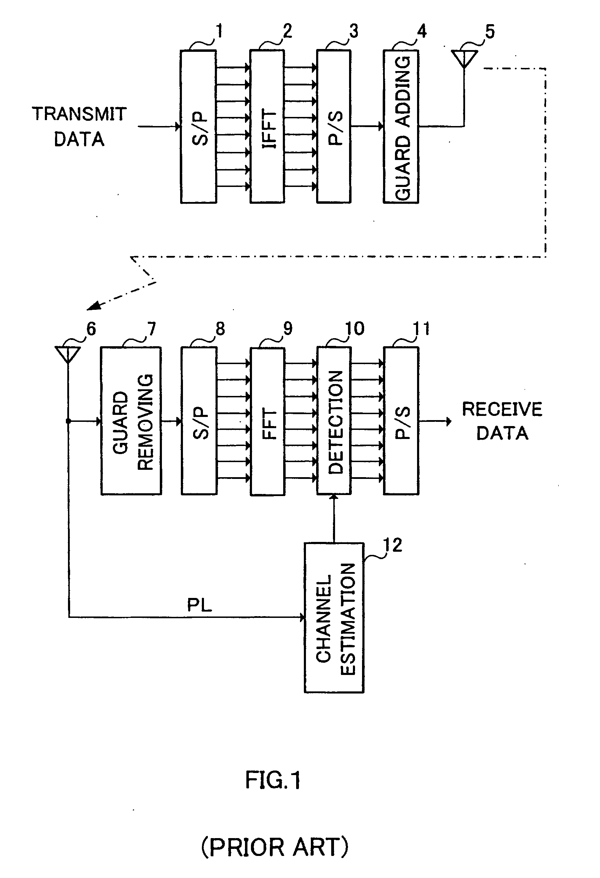

Conventional OFDM communication will now be described. FIG.1 is a block diagram showing the configuration of a conventional OFDM radio receiving apparatus and OFDM radio transmitting apparatus.

In the OFDM radio transmitting apparatus, transmit data undergoes S/P (serial/parallel) conversion processing in an S/P processing section 1, and the signals resulting from S/P conversion processing are output to an IFFT (Inverse Fast Fourier Transform) processing section 2. In the IFFT processing section 2, IFFT processing is performed on the signals resulting from S/P conversion processing, and the post-IFFT signals are output to a P/S (parallel/serial) processing section 3. In the P/S processing section 3, signals that have undergone IFFT processing are subjected to P/S conversion processing, and the resulting signal is output to a guard adding section 4. At this time, a pilot signal (PL) is admixed to a moderate degree (normally, at specific intervals or in a specific subcarrier) to enable channel estimation to be performed on the receiving side.

In the guard adding section 4, guard intervals are inserted in the signal resulting from P/S conversion processing, creating a transmit signal. This transmit signal is transmitted via an antenna 5.

In the OFDM radio receiving apparatus, a radio signal is received vi an antenna 6, and sent to a guard removing section 7. In the guard removing section 7, guard interval portions are removed from the received signal, and the signal that has undergone guard interval removal is output to an S/P processing section 8.

In the S/P processing section 8, S/P conversion processing is performed on the signal that has undergone guard interval removal, and the signals resulting from S/P conversion processing are output to an FFT (Fast Fourier Transform) processing section 9. In the FFT processing section 9, FFT processing is performed on the signals resulting from S/P conversion processing, and the post-FFT signals are output to a detection section 10.

Meanwhile, the pilot signal (PL) extracted from the received signal is output to a channel estimation section 12. In the channel estimation section 12, channel estimation is performed using the PL signal. The channel estimate obtained by this channel estimation is output to the detection section 10. In the detection section 10, signals that have undergone FFT processing are detected using the channel estimate, and signals that have undergone detection are output to a P/S processing section 11.

In the P/S processing section 11, P/S conversion processing is performed on the signals that have undergone IFFT processing, and the signal resulting from P/S conversion processing is output as receive data.

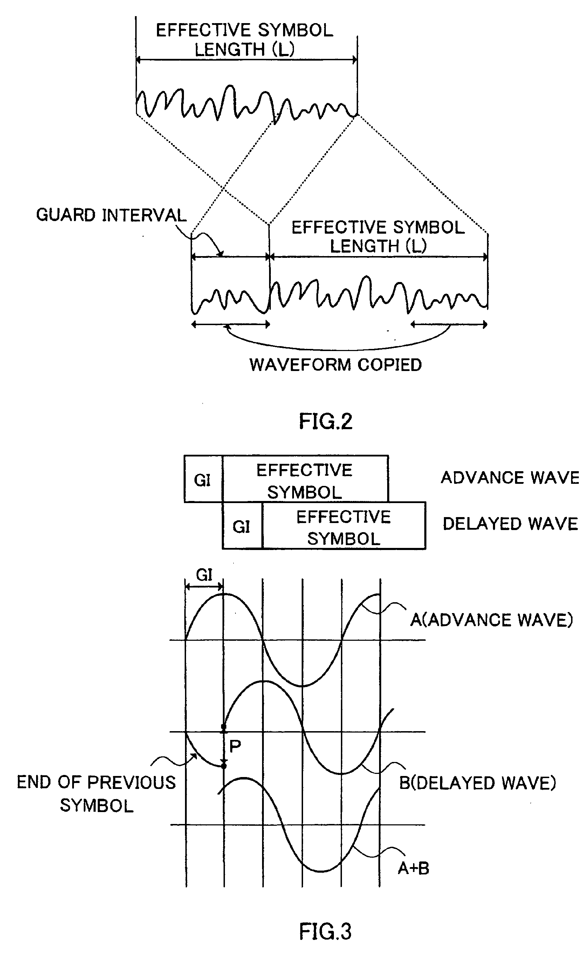

Guard intervals will now be described. As shown in FIG.2, guard interval insertion can be implemented by copying the waveform of the part following an OFDM symbol at the start of that OFDM symbol. By this means, in OFDM communication it is possible to permit multipathing of a delay time corresponding to the time to be copied as a guard interval.

Specifically, as shown in FIG. 3, when the delay time of a delayed wave in comparison with an advance wave is shorter than the guard interval, discontinuous part P is not incorporated in the FFT section. As a result, the FFT section contains the sum of the sine waves of advance wave A and delayed wave B. When the sine waves are added, a sine wave is preserved, although its phase and amplitude are different, and therefore signal distortion does not occur. According to this principle, multipathing of a delay time equivalent to the guard interval is permitted.

However, when guard intervals are inserted in a transmit signal, transmission efficiency declines proportionally. Therefore, the insertion of long guard intervals is disadvantageous from the standpoint of transmission efficiency. For example, if the probability of a delayed wave with a long delay time occurring is about 10%, inserting long guard intervals for this 10% is not desirable when transmission efficiency is taken into consideration.

Therefore, since the length of a guard interval is normally made of an order corresponding to a delay with a high probability of occurring, the delay component may exceed the guard interval with a certain probability. If the delay time of a delayed wave in comparison with an advance wave exceeds the guard interval, a discontinuity is incorporated into the FFT section. Consequently, when advance wave A and delayed wave B are added, a sine wave is not preserved and signal distortion occurs. As a result, there is mutual interference between all the carriers, and OFDM performance degrades sharply.

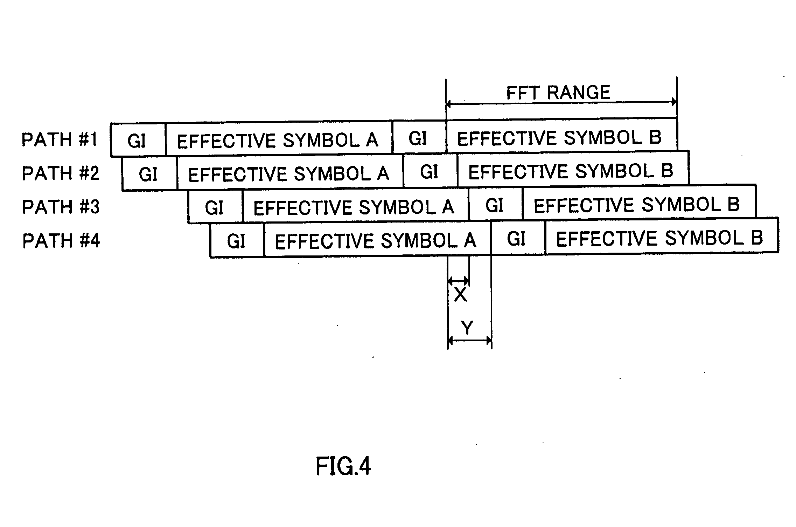

Specifically, as shown in FIG.4, with regard to path #3 and path #4 in which the delay time of a delayed wave in comparison with an advance wave exceeds the guard interval, loss of effective symbol B and interference from effective symbol A occur in range X for path #3, and loss of effective symbol B and interference from effective symbol A occur in range Y for path #4. Interference invites an increase in interference power, and symbol loss disrupts orthogonality between subcarriers. Therefore, such interference and symbol loss result in degradation of OFDM performance.

Disclosure of Invention

It is an object of the present invention to provide a multipath interference canceling apparatus and multipath interference canceling method that enable reception performance to be maintained even if the delay time of a delayed wave in comparison with an advance wave exceeds a guard interval.

This object is achieved by generating a replica of an immediately preceding information signal or an information signal during reception using a demodulated signal obtained by demodulating a received signal, and eliminating the effects of interference due to a path with a delay time so long as to exceed a guard interval using this replica, thereby maintaining transmission quality independently of the length of the guard interval.

Brief Description of Drawings

The above and other objects and features of the present invention will become clear from the following description of the preferred embodiments taken in conjunction with the accompanying drawings.

FIG.1 is a block diagram showing the configuration of a conventional OFDM radio receiving apparatus and OFDM radio transmitting apparatus;
FIG.2 is a drawing for explaining the guard interval generation method in OFDM;
FIG.3 is a drawing for explaining the effect of a guard interval in OFDM;
FIG.4 is a drawing for explaining the effect of a delayed wave that exceeds the guard interval in OFDM;
FIG.5 is a block diagram showing the configuration of a radio receiving apparatus equipped with a multipath interference canceling apparatus according to Embodiment 1 of the present invention;
FIG. 6 is a drawing for explaining a replica creation path in a multipath interference canceling apparatus according to Embodiment 1 of the present invention;
FIG.7 is a drawing for explaining the range of replica creation in a multipath interference canceling apparatus according to Embodiment 1 of the present invention;
FIG.8 is a block diagram showing the configuration of a radio receiving apparatus equipped with a multipath interference canceling apparatus according to Embodiment 2 of the present invention;
FIG.9 is a block diagram showing the configuration of a radio receiving apparatus equipped with a multipath interference canceling apparatus according to Embodiment 2 of the present invention;
FIG.10 is a drawing for explaining an example of a time window in a multipath interference canceling apparatus according to Embodiment 2 of the present invention;
FIG.11 is a drawing for explaining another example of a time window in a multipath interference canceling apparatus according to Embodiment 2 of the present invention;
FIG.12 is a drawing for explaining another example of a time window in a multipath interference canceling apparatus according to Embodiment 2 of the present invention;
FIG. 13 is a block diagram showing the configuration of a radio receiving apparatus equipped with a multipath interference canceling apparatus according to Embodiment 3 of the present invention;
FIG.14 is a block diagram showing the configuration of a radio transmitting apparatus corresponding to a radio receiving apparatus equipped with a multipath interference canceling apparatus according to Embodiment 3 of the present invention;
FIG.15 is a drawing showing the general processing flow when an OFDM signal is demodulated and decoded;
FIG.16 is a drawing provided to explain an interference area and non-interference area;
FIG. 17 is a drawing showing a configuration whereby an interference area signal and non-interference area signal are subjected to Fourier transform processing separately;
FIG.18 is a drawing showing an actual circuit configuration that implements Fourier transform processing for an interference area signal;

FIG.19 is a drawing showing the configuration of an FIR filter that performs the same processing as an FFT;
FIG.20 is a drawing showing the configuration of a multipath interference canceling apparatus according to Embodiment 4 of the present invention;
FIG.21 is a flowchart showing the multipath interference canceling processing procedure of Embodiment 4;
FIG.22 is a flowchart showing the multipath interference canceling processing procedure of Embodiment 5;
FIG.23 is a flowchart showing the multipath interference canceling processing procedure of Embodiment 6;
FIG.24A is a flowchart showing the multipath interference canceling processing procedure of Embodiment 7;
FIG.24B is a flowchart showing the multipath interference canceling processing procedure of Embodiment 7;
FIG.25A is a flowchart showing the multipath interference canceling processing procedure of Embodiment 8;
FIG.25B is a flowchart showing the multipath interference canceling processing procedure of Embodiment 8;
FIG.26 is a drawing provided to explain multipath interference canceling processing in Embodiment 9;
FIG.27 is a flowchart showing the multipath interference canceling processing procedure of Embodiment 9;
FIG.28 is a flowchart showing the multipath interference canceling processing procedure of Embodiment 10;
FIG. 29 is a block diagram showing the configuration of a multipath interference canceling apparatus according to Embodiment 11 of the present invention;
FIG.30 is a flowchart showing the multipath interference canceling processing procedure of Embodiment 11;
FIG.31 is a drawing provided to explain multipath interference canceling processing in Embodiment 11;
FIG.32 is a block diagram showing the configuration of a multipath interference canceling apparatus according to Embodiment 12 of the present invention;
FIG.33 is a flowchart showing the multipath interference canceling processing procedure of Embodiment 12;
FIG.34 is a block diagram showing the configuration of a multipath interference canceling apparatus according to Embodiment 13 of the present invention;
FIG.35A is a flowchart showing the multipath interference canceling processing procedure of Embodiment 13;
FIG.35B is a flowchart showing the multipath interference canceling processing procedure of Embodiment 13;
FIG. 36 is a block diagram showing the configuration of a multipath interference canceling apparatus according to Embodiment 14 of the present invention;
FIG.37A is a flowchart showing the multipath interference canceling processing procedure of Embodiment 14; and
FIG.37B is a flowchart showing the multipath interference canceling processing procedure of Embodiment 14.

Best Mode for Carrying out the Invention

Conventionally, in multicarrier communications, guard intervals are provided to prevent interference occurring in paths with a delay time difference. The length of these guard intervals is set taking transmission efficiency into consideration. With a conventional system, if there is a path with a long delay time that exceeds the guard interval, no countermeasures can be taken and transmission quality cannot be assured.

The present inventors considered this point, and arrived at the present invention by noting that transmission quality can be maintained, independently of the length of the guard interval, by eliminating interference for a path that has a long delay time exceeding the guard interval.

With reference now to the accompanying drawings, embodiments of the present invention will be explained in detail below.

(Embodiment 1)

In this embodiment, a case will be described in which interference (inward leakage) from effective symbol A in section X and section Y in FIG.4 is canceled.

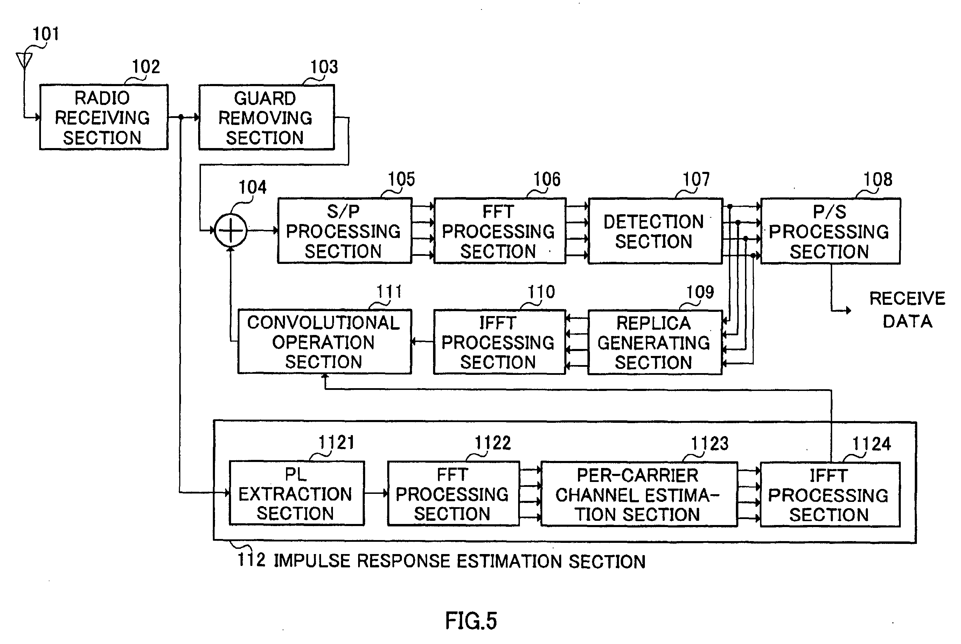

FIG. 5 is a block diagram showing the configuration of a radio receiving apparatus equipped with a multipath interference canceling apparatus according to Embodiment 1 of the present invention.

A radio signal is received by a radio receiving section 102 via an antenna 101. In the radio receiving section 102, radio reception processing (such as down-conversion or A/D conversion, for example) is carried out on the radio signal, and the signal that has undergone radio reception processing is output to a guard removing section 103, and is also output to a PL extraction section 1121 of an impulse response estimation section 112.

In the guard removing section 103, guard interval parts are removed from the signal that has undergone radio reception processing, and the signal that has undergone guard interval removal is output to an S/P processing section 105. In the S/P processing section 105, S/P conversion processing is performed on the signal that has undergone guard interval removal, and the signals resulting from S/P conversion processing are output to an FFT processing section 106. In the FFT processing section 106, FFT processing is carried out on the signals resulting from S/P conversion processing, and the post-FFT signals are output to a detection section 107.

In the detection section 107, signals that have undergone FFT processing are detected using a channel estimate, and the signals that have undergone detection are output to a P/S processing section 108, and are also output to a replica generating section 109. In the P/S processing section 108, P/S conversion processing is performed on signals that have undergone IFFT processing, and the signal resulting from P/S conversion processing is output as receive data.

In the replica generating section 109, received signal replicas are generated using the post-detection signals. The generated replicas are output to an IFFT processing section 110. In the IFFT processing section 110, IFFT processing is carried out on the replicas, and the signal resulting from IFFT processing is output to a convolutional operation section 111.

In the convolutional operation section 111, an impulse response estimated by the impulse response estimation section 112 is convoluted for the replica that has undergone IFFT processing. The replica for which this impulse response convolutional has been carried out is output to a subtraction section 104.

In the impulse response estimation section 112, a PL signal is extracted by the PL extraction section 1121 from the signal subjected to radio reception processing. This PL signal is output to an FFT processing section 1122. In this FFT processing section 1122, FFT processing is carried out on the PL signal, and the PL signals resulting from FFT processing are output to a per-carrier channel estimation section 1123.

In the per-carrier channel estimation section 1123, per-carrier channel estimation is carried out using the PL signals resulting from FFT processing. The obtained per-carrier channel estimates are output to an IFFT processing section 1124. In this IFFT processing section 1124, the per-carrier channel estimates are subjected to IFFT processing, and the obtained result is output to the convolutional operation section 111 and replica generating section 109 as an impulse response.

Next, the operation of a multipath interference canceling apparatus that has the above-described configuration will be described.

First, a signal that has undergone radio reception processing and from which guard intervals have been removed is sequentially subjected to S/P conversion processing by the S/P processing section 105 and FFT processing by FFT processing section 106, and the resulting signals are demodulated by the detection section 107. These demodulated signals are output to the replica generating section 109. In the replica generating section 109, received signal replicas are generated using the channel impulse response estimated by the impulse response estimation section 112.

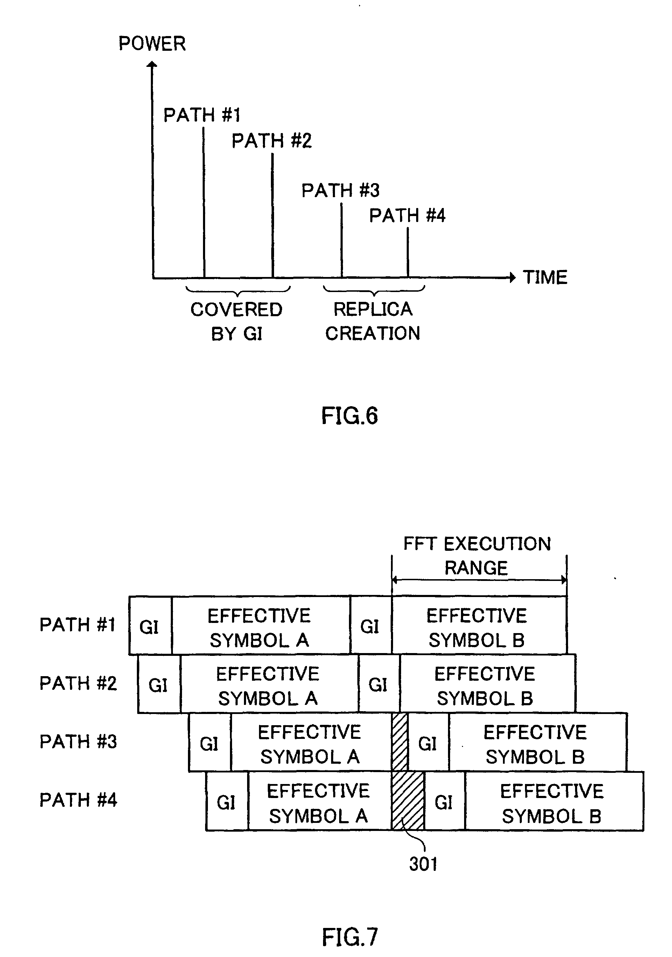

Specifically, taking the case illustrated in FIG. 4, path #3 and path #4 are paths with a delay time longer than the guard interval. Therefore, the replica generating section 109 creates replicas of path #3 and path #4 for effective symbol A, as shown in FIG. 6. These replicas can be created using the impulse response estimated by the impulse response estimation section 112.

With OFDM the symbol rate is low, and it is therefore not possible to find an impulse response by means of correlation and use this for replica creation, as with CDMA, etc. This is because time resolution is low in OFDM-that is to say, the time correlation between adjacent symbols is high-and so direct estimation is not possible. Therefore, in the present invention, per-carrier channel estimates are found using a pilot signal, which is a known signal, and an impulse response is found by IFFT processing of these channel estimates. A replica is generated using this impulse response.

In the convolutional operation section 111, interference part 301 shown in FIG.7 (the shaded area in the figure) is found by convolution of the impulse response in the path #3 and path #4 replicas. In the subtraction section 104, interference part 301 is subtracted from the next OFDM symbol. That is to say, interference part 301 is found using effective symbol A, and this interference part 301 (the part leaking into the range in which an effective symbol B FFT is performed) is canceled in effective symbol B. By this means, it is possible to prevent distortion occurring in effective symbol B.

The signal from which interference part 301 has been subtracted sequentially undergoes S/P conversion processing by the S/P processing section 105, FFT processing by FFT processing section 106, detection by the detection section 107, and P/S conversion processing by the P/S processing section 108, resulting in output of receive data.

Thus, according to this embodiment, a part in which interference with a later symbol is caused due to a delay time longer than the guard interval is found from the replica and impulse response of the preceding symbol, and that part is eliminated from the following symbol, thereby making it possible to prevent the occurrence of symbol distortion and degradation of OFDM performance.

Also, since interference due to a path in which the guard interval is exceeded can be canceled in this way, it is possible to make the guard interval shorter, and in some cases, to eliminate the guard interval. As a result, transmission efficiency can be improved.

(Embodiment 2)

In this embodiment, a case will be described in which both interference (inward leakage) from effective symbol A in section X and section Y in FIG.4 is canceled, and loss of effective symbol B in section X and section Y is restored.

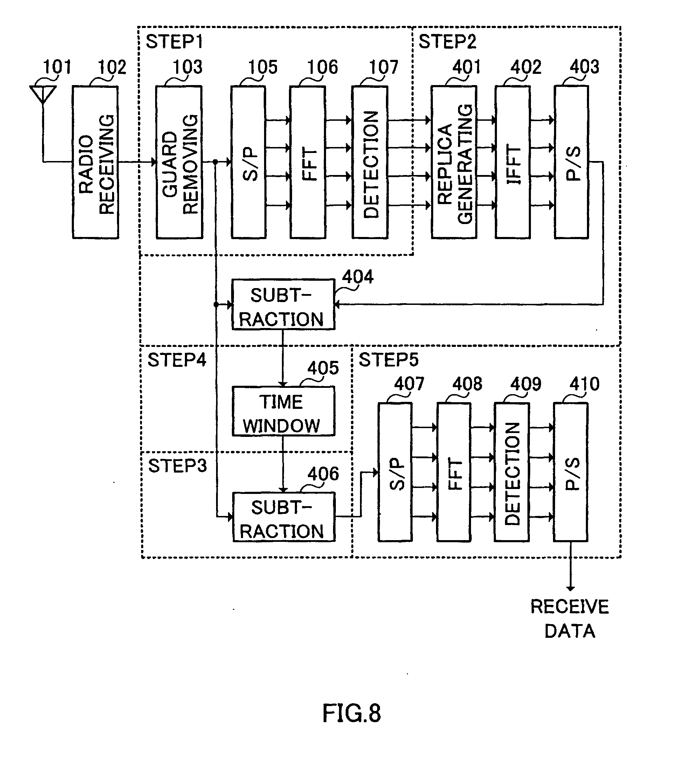

Parts in FIG.8 corresponding to those in FIG.5 are assigned the same codes as in FIG.5 and their detailed explanations are omitted.

A radio signal is received by a radio receiving section 102 via an antenna 101. In the radio receiving section 102, predetermined radio reception processing is carried out on the radio signal, and the signal that has undergone radio reception processing is output to a STEP 1 guard removing section 103, and is also output to a STEP 2 subtraction section 404 and a STEP 3 subtraction section 406. In FIG.8, "STEP" designations are used to simplify the description, and there are no particular restrictions on their order, etc.

In the guard removing section 103, guard interval parts are removed from the signal that has undergone radio reception processing, and the signal that has undergone guard interval removal is output to an S/P processing section 105. In the S/P processing section 105, S/P conversion processing is performed on the signal that has undergone guard interval removal, and the signals resulting from S/P conversion processing are output to an FFT processing section 106. In the FFT processing section 106, FFT processing is carried out on the signals resulting from S/P conversion processing, and the post-FFT signals are output to a detection section 107.

In the detection section 107, signals that have undergone FFT processing are detected using a channel estimate, and the signals that have undergone detection are output to a STEP 2 replica generating section 401. In the replica generating section 401, a received signal replica is generated using the post-detection signals. The generated replica is output to an IFFT processing section 402. In the IFFT processing section 402, IFFT processing is carried out on the replica, and a replica that has undergone IFFT processing is output to a P/S processing section 403. In this P/S processing section 403, P/S conversion processing is performed on the replica that has undergone IFFT processing, and a replica that has undergone P/S conversion processing is output to subtraction section 404.

In subtraction section 404, the replica is subtracted from the received signal that has undergone guard interval removal, and the signal resulting from this subtraction is output to a time window processing section 405. In the STEP 4 time window processing section 405, processing is performed to eliminate distortion by means of a predetermined time window, and the signal on which time window processing has been performed is output to the STEP 3 subtraction section 406.

In subtraction section 406, the signal that has undergone time window processing is subtracted from the received signal that has undergone guard interval removal, and the signal resulting from this subtraction is output to a STEP 5 S/P processing section 407. In S/P processing section 407, S/P conversion processing is carried out on the signal resulting from the subtraction, and the signal subjected to S/P conversion processing is output to an FFT processing section 408. In FFT processing section 408, FFT processing is performed on the signals resulting from S/P conversion processing, and the post-FFT signals are output to a detection section 409.

In detection section 409, signal that have undergone FFT processing are detected, and the detected signals are output to a P/S processing section 410. In P/S processing section 410, P/S conversion processing is carried out on the detected signals, and the signal resulting from P/S conversion processing is output as receive data.

Next, the operation of a multipath interference canceling apparatus that has the above-described configuration will be described.

First, a signal that has undergone radio reception processing and from which guard intervals have been removed is sequentially subjected to S/P conversion processing by S/P processing section 105 and FFT processing by FFT processing section 106, after which a provisional decision value is obtained by detection section 107. This provisional decision value is output to the STEP 2 replica generating section 401. In the replica generating section 401, a received signal replica is generated using the provisional decision value.

Specifically, taking the case illustrated in FIG. 4, path #3 and path #4 are paths with a delay time longer than the guard interval. Here, unlike the case of Embodiment 1, the replica generating section 401 creates a received signal replica for effective symbol B.

The concept of interference canceling in this embodiment is as follows. First, a replica is generated using a provisional decision value after detection, and this replica is subtracted from the received signal (process A). In this case, if the provisional decision value is correct, an interference component and noise will be left by process A. Next, this interference component and noise are subtracted from the received signal (process B). By this means, a received signal from which the interference component and noise have been canceled is obtained.

However, if the provisional decision value is incorrect, demodulation will be performed with an incorrect component added as interference, and therefore an incorrect replica will be generated. Performing Processes A and B using this incorrect replica will not improve OFDM performance at all.

While noise is of the same level over an entire time period, interference due to a delay component is concentrated toward the start of effective symbols. As can be seen from FIG.4, the interference component of effective symbol B is concentrated toward the start of the effective symbol.

Thus, the present inventors considered this concentration of interference components, and came up with the idea of executing time window processing on a signal after process A. By this means, even if a provisional decision value is incorrect and an incorrect replica is used, by performing processing to eliminate an interference component and noise within a time window corresponding to the time in which interference components are concentrated, outside the time window there are no longer any effects of the incorrect replica, nor of the delayed wave, and there are only effects of noise. That is to say, within the time window interference from the preceding signal and noise are suppressed to a certain extent, and outside the time window waveforms are maintained unchanged. As a result, it is possible to reduce interference only for a part in which interference occurs.

Thereafter, noise can be canceled by performing process B. As a result, it is possible to improve OFDM performance.

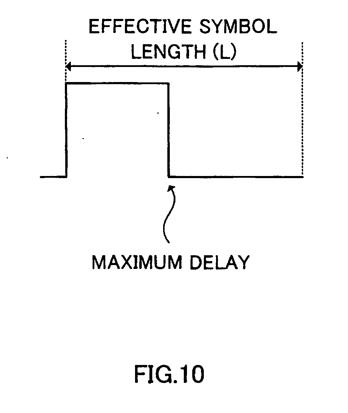

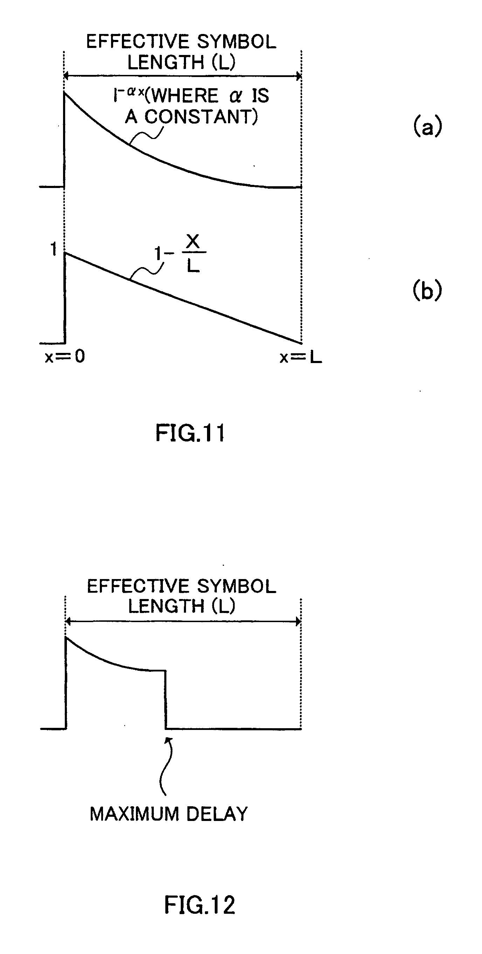

Possible methods of providing a time window include a method whereby the maximum delay time is found and a square window is set that allows signals to pass only during that time, as shown in FIG. 10, and a method whereby a time window that is attenuated exponentially or linearly is set, as shown in FIG.11 (a) and FIG.11 (b) . It is also possible to find the maximum delay time and set a time window that is attenuated exponentially or linearly for that time only, as shown in FIG.12.

In the apparatus shown in FIG. 8, a replica generated by the replica generating section 401 undergoes IFFT processing by the IFFT processing section 402 and P/S conversion processing by P/S processing section 403. Then subtraction section 404 subtracts the replica that has undergone P/S conversion processing from a received signal that has undergone guard interval removal. By this means, as long as the provisional decision value in the detection section is correct, an interference component and noise are obtained.

The result of subtraction by subtraction section 404 is output to the time window processing section 405. The time window processing section 405 provides processing to eliminate an interference component in a time window containing the time in which interference components are concentrated. By this means, an interference component can be canceled even if the provisional decision value in the detection section is incorrect. The result of processing by the time window processing section 405 (noise) is output to subtraction section 406. In subtraction section 406, this processing result is subtracted from the received signal that has undergone guard interval removal. The result of this subtraction is output to the STEP5 S/P processing section 407.

This subtraction result (the signal resulting from elimination of an interference component and noise from the received signal) is sequentially subjected to S/P conversion processing by S/P processing section 407, FFT processing by FFT processing section 408, demodulation by detection section 409, and P/S conversion processing by P/S processing section 410, and the result of this sequence of processing is output as receive data.

Thus, according to this embodiment, a replica of a received signal is subtracted from the received signal, leaving an interference component and noise, the interference component is canceled therefrom by time window processing, and then noise is canceled in the received signal, thereby making it possible to prevent the occurrence of symbol distortion in a part in which interference is caused due to a path with a delay time longer than the guard interval, and to prevent degradation of OFDM performance.

Also, since interference due to a path in which the guard interval is exceeded can be canceled in this way, it is possible to make the guard interval shorter, and in some cases, to eliminate the guard interval. As a result, transmission efficiency can be improved.

Moreover, according to this embodiment, unlike the case of Embodiment 1, it is not necessary to find an impulse response when generating a replica, thus enabling the processing load for replica generation to be reduced.

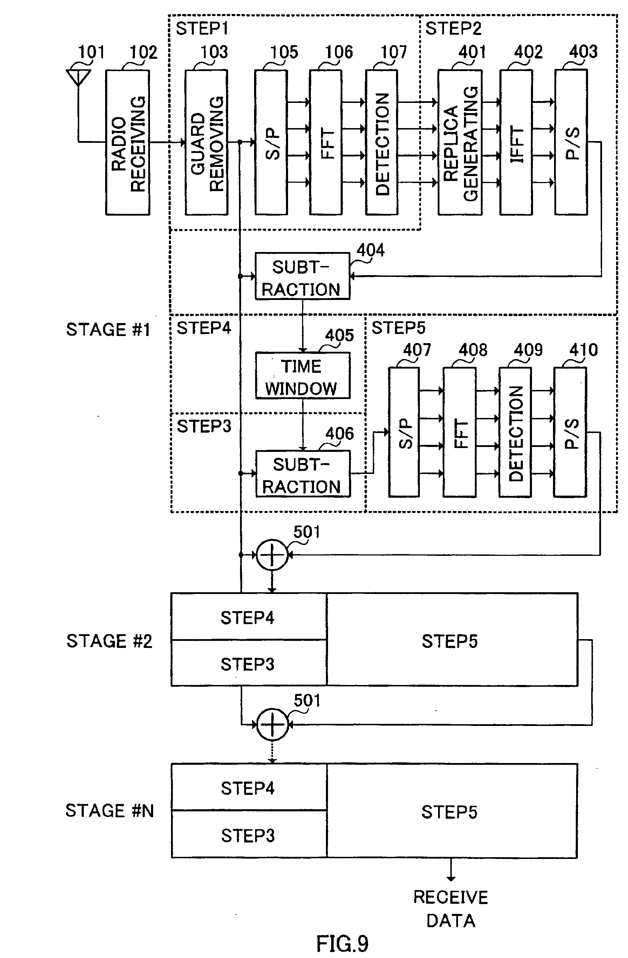

Furthermore, according to this embodiment, a multi-stage configuration can be used as shown in FIG.9. Specifically, in FIG.9, receive data obtained in stage #1 is output to a subtraction section 501, and in subtraction section 501 the receive data obtained in stage #1 is subtracted from the received signal. Then, in stage #2, the above-described interference canceling processing is performed and stage #2 receive data is output. Receive data is output after repeating this through stage #N.

Using a multi-stage configuration in this way enables interference to be dependably canceled in the received signal by executing interference canceling processing repeatedly, thereby making it possible to further improve performance.

(Embodiment 3)

In Embodiment 3, a case will be described in which the time window shown in FIG.10 or FIG.12 is set as a time window.

For the time windows shown in FIG.10 and FIG.12, the maximum delay time is found and the time window is set based on this maximum delay time. Possible methods of finding this maximum delay time include performing IFFT processing on a channel impulse response and using the result, in the same way as in Embodiment 1, or finding an impulse response on a reverse channel, measuring the maximum delay, and having that maximum delay information transmitted. The method in which maximum delay information is transmitted on a reverse channel is particularly effective in the case of communications with high time resolution, such as when the reverse channel is a CDMA channel.

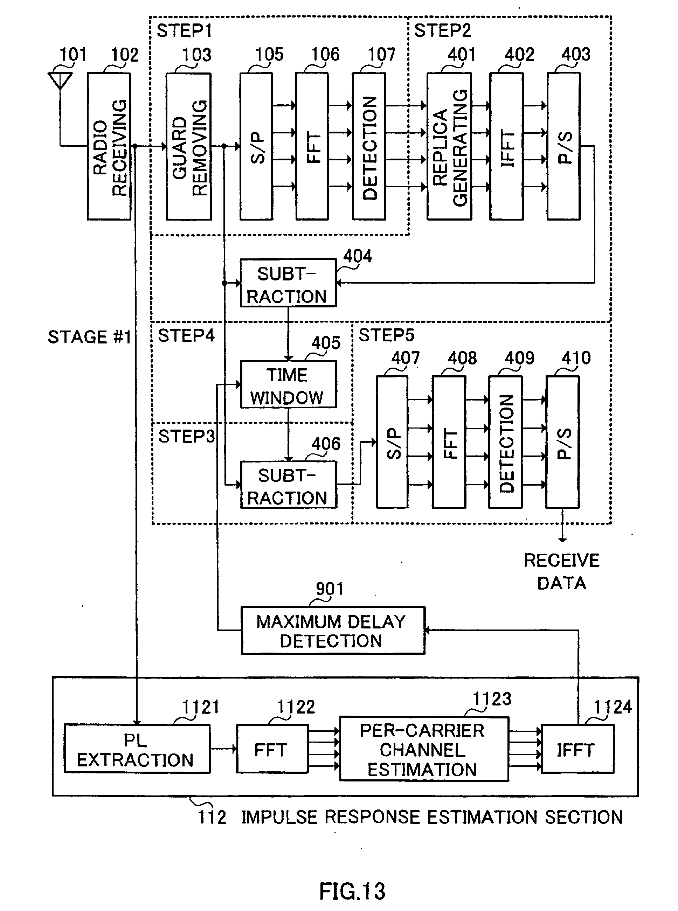

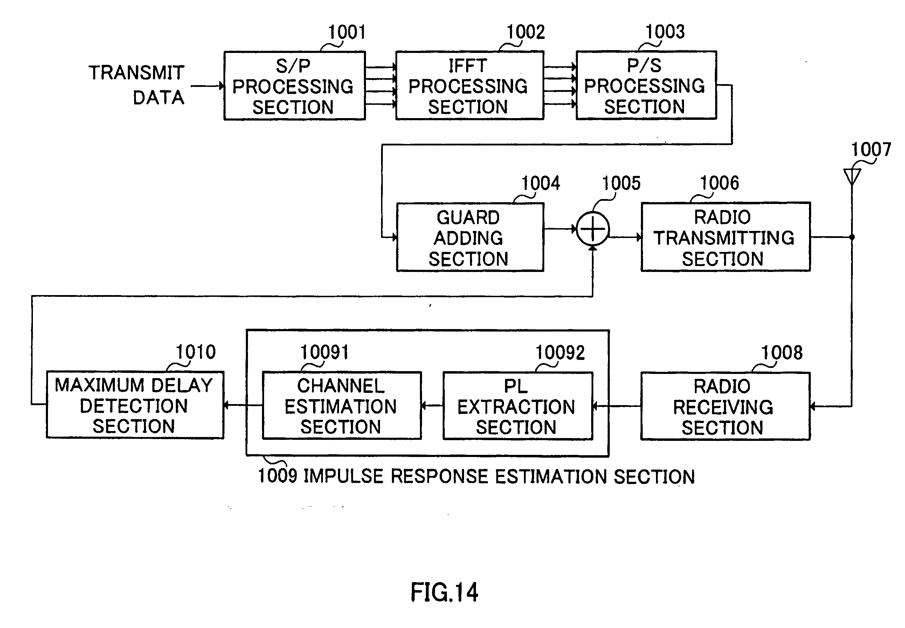

FIG.13 is a block diagram showing the configuration of a radio receiving apparatus equipped with a multipath interference canceling apparatus according to Embodiment 3 of the present invention, and FIG.14 is a block diagram showing the configuration of a radio transmitting apparatus corresponding to a radio receiving apparatus equipped with a multipath interference canceling apparatus according to Embodiment 3 of the present invention.

In the radio receiving apparatus shown in FIG.13, the maximum delay time is estimated by the apparatus and a time window is set based on that maximum delay time. Parts in FIG.13 corresponding to those in FIG.8 are assigned the same codes as in FIG.8 and their detailed explanations are omitted.

The radio receiving apparatus shown in FIG.13 is provided with an impulse response estimation section 112 that estimates the impulse response of a channel, and a maximum delay detection section 901 that detects the maximum delay based on the estimated impulse response.

In a radio receiving apparatus of this kind, in the impulse response estimation section 112 a PL signal is extracted by an FFT processing section 1122 from a signal that has undergone radio reception processing. In this FFT processing section 1122, FFT processing is performed on the PL signal, and the PL signals resulting from FFT processing are output to a per-carrier channel estimation section 1123.

In the per-carrier channel estimation section 1123, per-carrier channel estimation is carried out using the PL signals resulting from FFT processing. The obtained per-carrier channel estimates are output to an IFFT processing section 1124. In this IFFT processing section 1124, the per-carrier channel estimates are subjected to IFFT processing, and the obtained result is output to the maximum delay detection section 901 as an impulse response.

In the maximum delay detection section 901, the maximum delay is detected using the estimated impulse response. The detected maximum delay is output to a time window processing section 405. In the time window processing section 405, the time window shown in FIG.10 is set based on the maximum delay. Then the time window processing section 405 cancels an interference component in the part in which interference components are concentrated.

Meanwhile, in the radio transmitting apparatus shown in FIG.14, the maximum delay is measured from the reverse channel impulse response, that maximum delay is transmitted to a radio receiving apparatus, and a time window is set in the radio receiving apparatus based on the maximum delay. In FIG.14, a case is assumed in which the reverse channel is a CDMA channel with high time resolution. However, the reverse channel is not restricted to a CDMA channel, and may be an OFDM channel with low time resolution. In this case, as in Embodiment 1, it is necessary for a channel estimate to be subjected to IFFT processing to produce an impulse response, and for the maximum delay to be found from this impulse response.

In the apparatus shown in FIG.14, transmit data undergoes S/P conversion processing in an S/P processing section 1001, and the signals resulting from S/P conversion processing are output to an IFFT processing section 1002. In the IFFT processing section 1002, IFFT processing is performed on the signals resulting from S/P conversion processing, and the post-IFFT signals are output to a P/S processing section 1003. In the P/S processing section 1003, signals that have undergone IFFT processing are subjected to P/S conversion processing, and the resulting signal is output to a guard adding section 1004.

Meanwhile, a reverse channel signal is received by a radio receiving section 1008 via an antenna 1007. In the radio receiving section 1008, predetermined radio reception processing is carried out on the received signal. The signal that has undergone radio reception processing is output to an impulse response estimation section 1009 and PL extraction section 10092.

In the PL extraction section 10092, despreading processing is performed on the signal that has undergone radio reception processing, and the PL signal is extracted. This PL signal is output to a channel estimation section 10091. In the channel estimation section 10091, channel estimation is performed using the PL signal. This channel estimate is output to a maximum delay detection section 1010. In the maximum delay detection section 1010, the maximum delay is detected with the channel estimate as an impulse response. This maximum delay information is output to an adder 1005.

In the guard adding section 1004, guard intervals are inserted in the signal resulting from P/S conversion processing, creating a transmit signal. This transmit signal is output to the adder 1005. In the adder 1005, maximum delay information is added to the transmit signal. The signal resulting from this addition undergoes predetermined radio transmission processing and is then transmitted to a radio receiving apparatus via the antenna 1007. Here, the radio receiving apparatus has the configuration shown in FIG.8.

When the radio receiving apparatus receives maximum delay information, this maximum delay information is output to the time window processing section 405. In the time window processing section 405, the time window shown in FIG.10 is set based on the maximum delay. Using this time window, the time window processing section 405 then cancels an interference component in the part in which interference components are concentrated.

Thus, according to this embodiment, a time window is set based on a maximum delay, and an interference component in a part in which interference components are concentrated are canceled using this time window, thereby making it possible to prevent, with high precision, the occurrence of symbol distortion in a part in which interference is caused due to a path with a delay time longer than the guard interval, and to prevent degradation of OFDM performance.

(Embodiment 4)

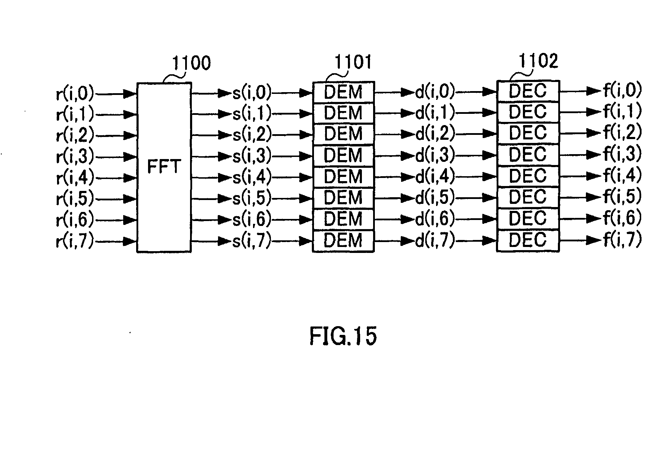

Before the configuration according to this embodiment is described, the general processing flow when an OFDM signal is demodulated and decoded will first be described using FIG.15. In FIG.15, r (i, j) indicates the received signal of the j' th sample in the i' th OFDM symbol, s (i, k) indicates the signal after FFT of the k'th subcarrier in the i' th OFDM symbol, d (i, k) indicates the signal after coherent detection of the k'th subcarrier in the i'th OFDM symbol, and f (i, k) indicates the hard decision value of the k'th subcarrier signal in the i' th OFDM symbol.

That is to say, time-domain signals are first converted to frequency-domain signals by having FFT processing executed on received signals r (i, j) by an FFT processing section 1100. A demodulation section (DEM) 1101 obtains post-coherent-detection signals d (i, k) by performing coherent detection on subcarrier signals s (i, k). In this example, coherent detection is used in the description, but the detection carried out at this time is not restricted to coherent detection. A decoding section (DEC) 1102 obtains receive data f (i, k) by executing a hard decision on post-coherent-detection signals d (i, k).

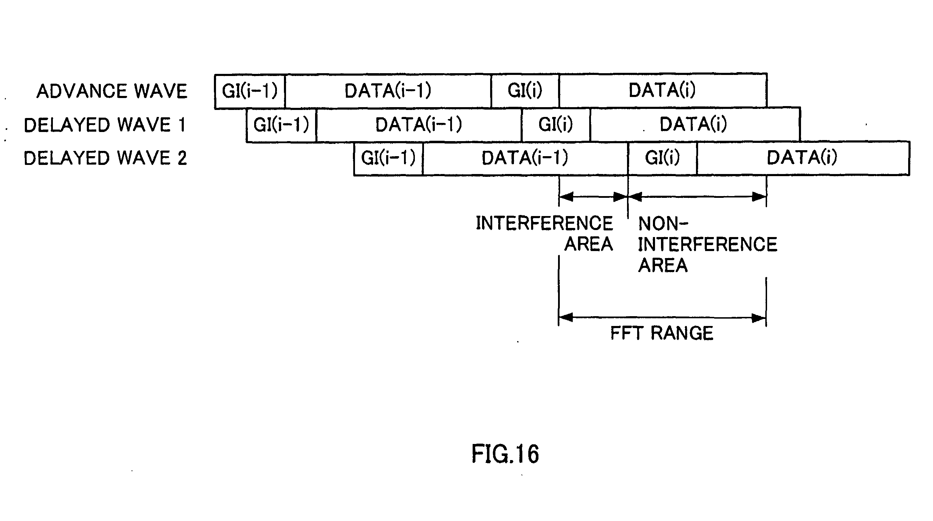

The principles of this embodiment will now be explained. As shown in FIG.16, degradation due to interference does not occur when only an advance wave and a delayed wave 1 that does not exceed a guard interval GI are present, but marked interference occurs when a delayed wave 2 that exceeds guard interval GI is present. However, even in these circumstances, although interference occurs in the time domain from the start of the FFT range until [maximum delay time Dmax - guard interval], interference does not occur in the time domain thereafter, and it is therefore possible to specify up to which sample from the start within the FFT range interference occurs if maximum delay time Dmax is applied.

Thus, as shown in FIG.16, the FFT range is divided into an area in which interference occurs due to a delayed wave (0 to n'th time domain signals, hereinafter referred to as "interference time domain") and a subsequent area in which interference does not occur (hereinafter referred to as "non-interference time domain").

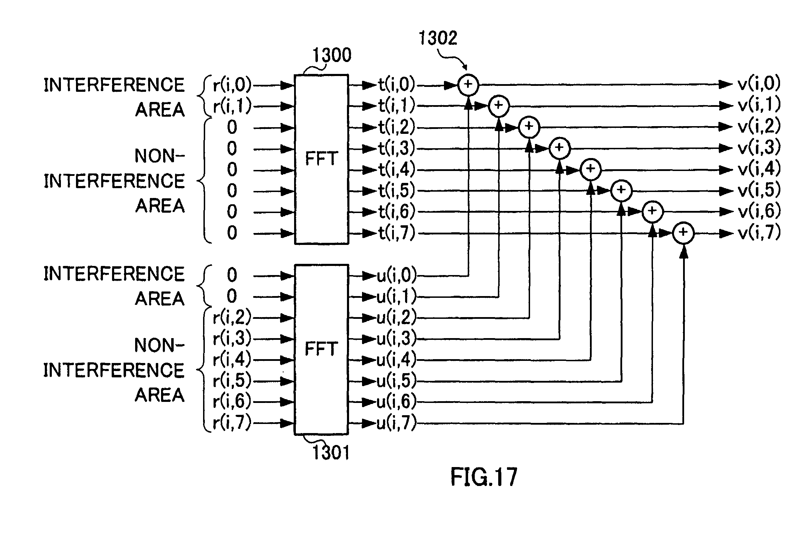

In this embodiment, FFT processing sections are provided that perform Fourier transform s of interference time domain sampling signals and non-interference time domain sampling signals. Specifically, as shown in FIG.17, interference area signals and non-interference area signals are subjected to FFT processing by respective FFT processing sections 1300 and 1301, with the respective other-side area received signals as 0, and then corresponding subcarrier signals that have undergone Fourier transform processing are added by a plurality of adders 1302.

In the figure here, t (i, k) indicates the k' th subcarrier signal found only from as far as the n'th received signal in the time domain within the i'th OFDM symbol, and u (i, k) indicates the k'th subcarrier signal found only from (n+1) 'th and subsequent received signals in the time domain within the i'th OFDM symbol. Here, if v (i, k) is taken as the k'th subcarrier signal to which t (i, k) and u (i, k) are added on an individual frequency component basis in the i' th symbol, since the computation is linear, v (i, k) = s (i, k) .

Thus, even when OFDM signals are divided into an interference area and non-interference area, Fourier transform processing is carried out separately on each, and subcarrier signals that have undergone Fourier transform processing are added, as shown in FIG.17, the same kind of processing results can be obtained as when OFDM signals are simply subjected to Fourier transform processing directly as in FIG.15.

To consider now interference-time-domain FFT processing section 1300 in FIG.17, the processing by FFT processing section 1300 can be represented as shown in the following equation, using an FFT known coefficient w (j, k).

$$t(i,k) = \sum_{j=0}^{n} w(j,k)r(i,j) \qquad \cdots \quad (1)$$

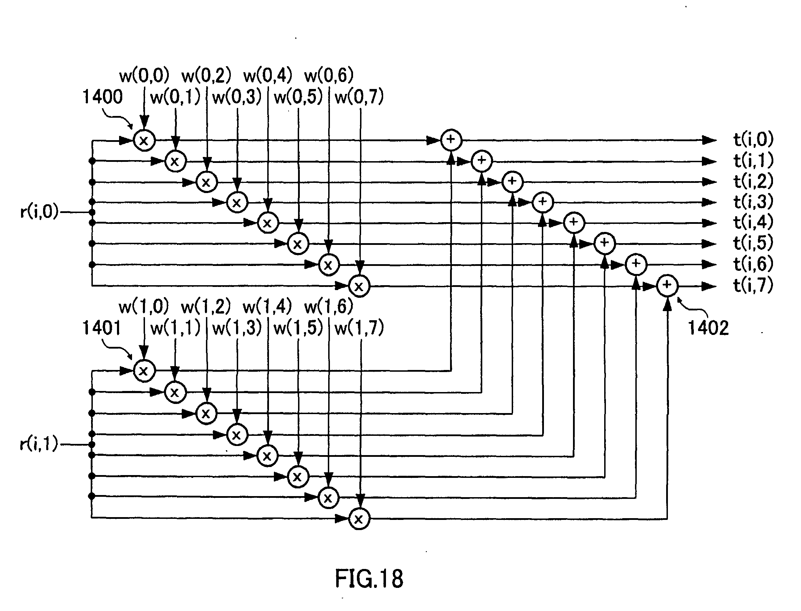

Equation (1) can be implemented by the kind of circuit configuration shown in FIG.18. That is to say, the actual processing of FFT processing section 1300 that performs Fourier transform processing of non-interference area signals in FIG.17 can be implemented by the kind of circuit shown in FIG.18.

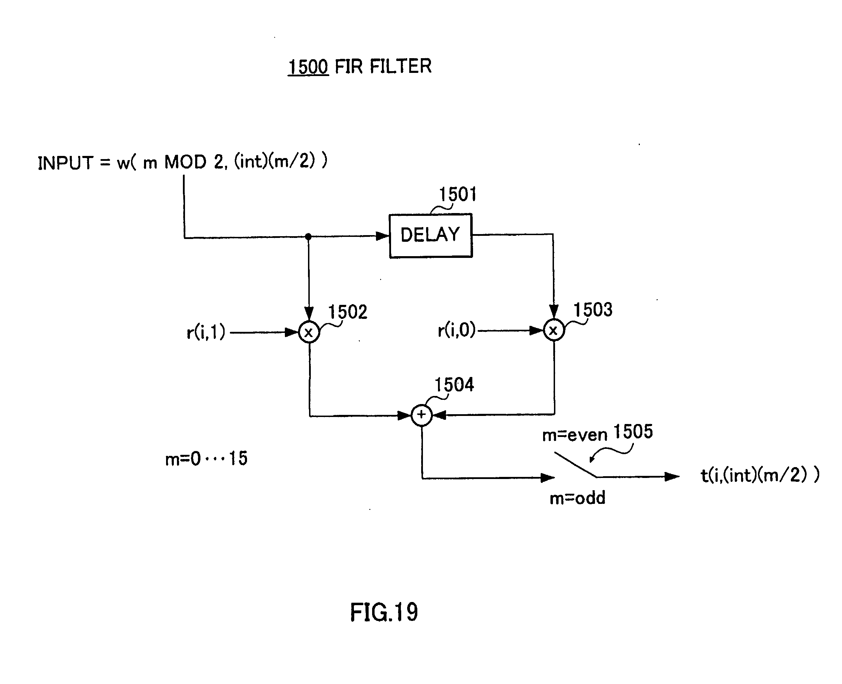

Moreover, the circuit in FIG.18 is equivalent to the FIR filter 1500 shown in FIG.19. That is to say, FFT processing section 1300 can be regarded as FIR filter 1500 using variable gain r (i, j) with FFT processing section 1300 known coefficient w (j, k) as its input.

Specifically, the value of known coefficient w (j, k) is sequentially modified and input to a multiplier 1502, and is also input to a multiplier 1503 via a delay element 1501, andmultiplication is performed by multipliers 1502 and 1503 with interference area sample signals as variable gain. The signals resulting from these multiplications are added by an adder 1504, and the resulting signal is output via a switch 1505. In the case of this embodiment it is assumed that the number of subcarriers is 8 and the number of interference area samples is 2, and therefore "m" in the figure represents 16 (=8×2) values from 0 to 15. Also, in this example, since there are two interference area samples, the switch 1505 outputs the addition result directly only when m is an odd number.

Thus, the present inventors found that FFT processing can be implemented by means of an FIR filter with a known coefficient as its input and sample signals as variable gain. Here, since a non-interference area received signal does not contain distortion other than noise, if an interference-area time waveform can be changed to an interference-free waveform, an interference-free OFDM signal can be obtained. This is equivalent to converging variable gain r (i, 1) and r (i, 0) of the FIR filter 1500 in FIG.19 to an optimal value. The present inventors thus thought of converging variable gain (that is, interference-area sampling signals) to an optimal value through sequential correction while using an adaptive algorithm.

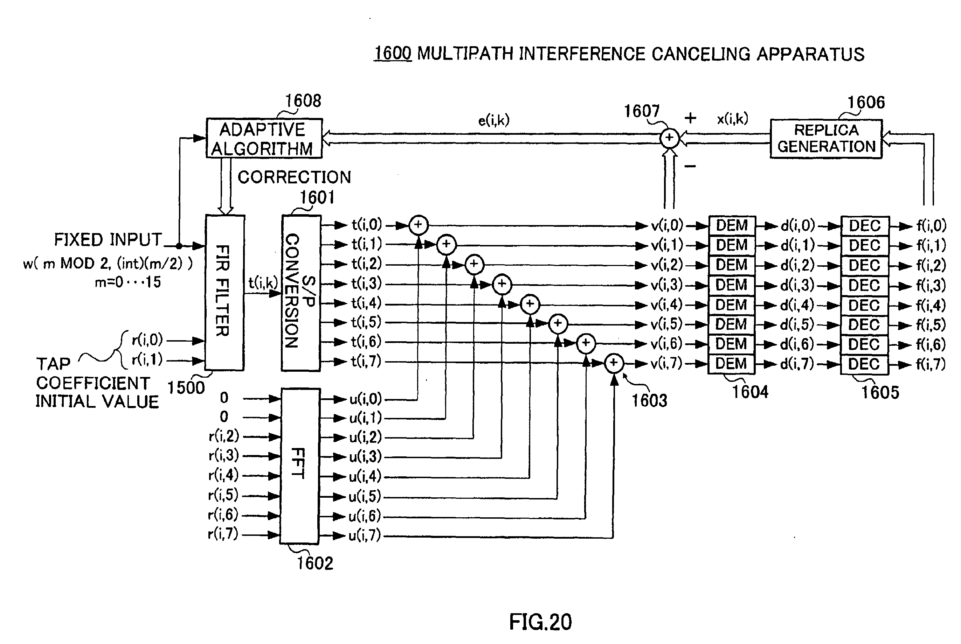

FIG.20 shows the configuration of a multipath interference canceling apparatus 1600 according to this embodiment. Into the FIR filter 1500, FFT known coefficients are sequentially input as fixed input, and interference-area sampling signals r (i, 0) and r (i, 1) are input as tap coefficient initial values. FIR filter 1500 output signal t (i, k) is sent to adders 1603 via a serial/parallel conversion (S/P conversion) section 1601.

Meanwhile, non-interference area sampling signals r (i, 2) through r (i, 7) are subjected to FFT processing by an FFT processing section 1602, and are then sent to adders 1603. Post-FFT signals v (i, k) in each subcarrier obtained by adders 1603 sequentially undergo coherent detection processing by demodulation sections (DEM) 1604 and hard decision processing by decoding sections (DEC) 1605, whereby hard decision values f (i, k) are obtained. In this embodiment, a case is described in which coherent detection is performed by demodulation sections (DEM) 1604, but the detection performed at this time is not restricted to coherent detection, and delay detection or the like, for example, may also be used.

In addition to the above-described configuration, the multipath interference canceling apparatus 1600 also has a replica generating section 1606. The replica generating section 1606 generates replica signals x (i, k) corresponding to post-FFT signals v (i, k) in each subcarrier by multiplying hard decision values f (i, k) by the channel amplitude and phase (that is, executing the reverse of coherent detection processing) on a subcarrier-by-subcarrier basis. This channel amplitude and phase information may be obtained based simply on the amplitude value and phase rotation amount of the pilot signal, or maybe obtainedby detecting an impulse response as in the above-described embodiments.

Difference values between post-FFT signals v (i, k) and replica signals x (i, k) are obtained by a subtracter 1607, and these difference values are sent to an adaptive algorithm section 1608 as error values e (i, k) of post-FFT signals v (i, k) and replica signals x (i, k).

The adaptive algorithm section 1608 is configured by means of LMS (Least Mean Square), RLS (Recursive Least Squares), GA (Generic Algorithm), etc., and sends to the FIR filter 1500 signals ordering correction of the interference area sampling signals r (i, j) used as FIR filter 1500 variable gain so that error values e (i, k) are decreased.

Next, the operation of the multipath interference canceling apparatus 1600 will be described. If hard decision values f (i, k) are correct, waveforms in which noise and interference have been canceled in v (i, k) are reproduced by the replica generating section 1606. As a result, if hard decision values f (i, k) are correct, then if interference area sampling signals r (i, j) (only when j = 0 to n) are converged so as to minimize error values e (i, k), demodulated signals v (i, k) in which distortion due to interference has been corrected should be obtained. Even if hard decision values f (i, k) include errors, as long as the error rate is small to some extent, convergence by means of an adaptive algorithm is still possible by making a suitable choice of parameters, in the same way as with a DFE (Decision Feedback Equalizer) or the like.

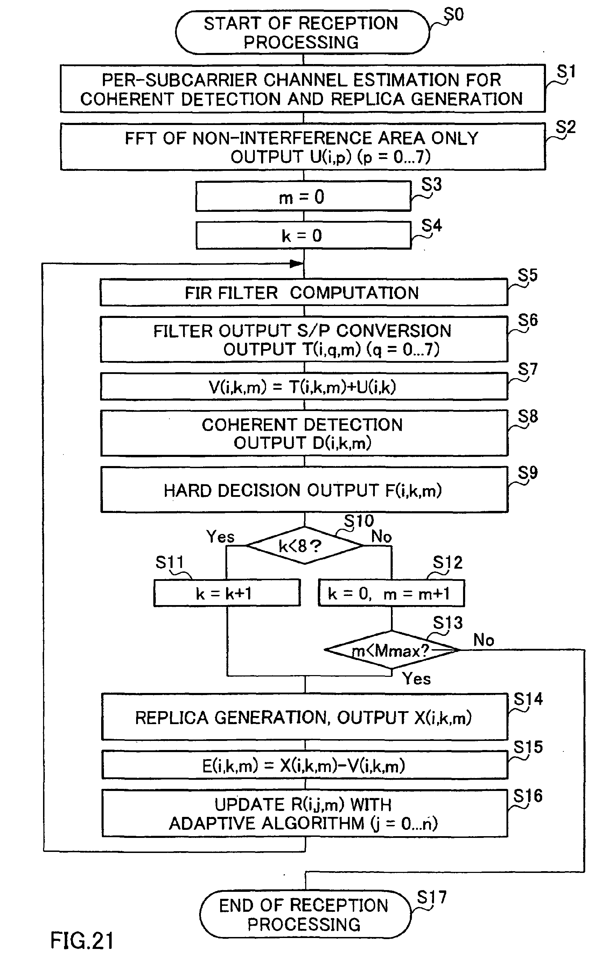

In this embodiment, the multipath interference canceling apparatus 1600 effectively cancels an interference component included in an OFDM signal by carrying out the kind of reception processing shown in FIG.21. As an adaptive algorithm achieves convergence by numerous repetitions, in FIG.21 the description of each signal in FIG.20 includes the number of repetitions "m". Also, variables in FIG.21 and FIG.20 have an upper-case to lower-case correspondence, so that, for example, V (i, k, m) in FIG.21 is the value at the m'th repetition of v (i, k) in FIG.20. The error in the m'th repetition is designated E (i, k, m), and a received signal in the range j = 0 through n updated using this is designated R (i, j, k, m).

After starting reception processing for the i'th OFDM symbol in step S0, in step S1 the multipath interference canceling apparatus 1600 carries out channel estimation for each subcarrier in order to perform coherent detection in demodulation sections 1604 and replica signal x (i, k) generation in the replica generating section 1606. Then in step S2, signal U (i, p) of each subcarrier is formed from only non-interference area sampling signals by having the FFT processing section 1602 perform Fourier transform processing of non-interference area sampling signals. In step S3, count value m of the multipath interference canceling apparatus 1600 repetition counter (provided, forexample, in the control section of the receiving apparatus in which the multipath interference canceling apparatus 1600 is installed) is reset, and in the next step, S4, subcarrier number k is reset. As an example with 8 subcarriers is illustrated here, k has a value from 0 to 7.

In step S5, the FIR filter 1500 takes an FFT known coefficient as input, and performs computation with interference area sample signals as variable gain, thereby sequentially forming signals T (i, q, m) of each subcarrier from interference area sampling signals only. In step S6, subcarrier signals T (i, q, m) sequentially obtained by the FIR filter 1500 undergo serial/parallel conversion by the serial/parallel conversion section 1601.

In step S7, addition signal V (i, k, m) is obtained by adding, with an adder 1603, interference area per-carrier signal T (i, k, m) obtained in steps S5 and S6, and non-interference area per-carrier signal U (i, k) obtained in step S2 in the corresponding subcarriers.

In step S8, demodulated signal D (i, k, m) is obtained by having coherent detection performed by a demodulation section 1604, and then in step S9, hard decision value F (i, k, m) is obtained by having a hard decision made by a decoding section 1605.

In step S10, it is determined whether or not the subcarrier number subject to adaptive algorithm processing this time is less than 8 (the number of subcarriers), and if this subcarrier number is less than 8, the processing flow proceeds to step S11 and subcarrier number k is incremented. Then, in step S14, k'th subcarrier replica signal X (i, k, m) is generated by the replica generating section 1606, and in step S15 error value E (i, k, m) is found by finding the difference between k'th subcarrier replica signal X (i, k, m) and addition signal V (i, k, m) by means of the subtracter 1607.

In step S16, the adaptive algorithm section 1608 corrects FIR filter 1500 variable gain (that is, interference area sampling signal) R (i, j, m) so that error value E (i, k, m) is decreased, and this is sent to the FIR filter 1500. After the processing in step S16, the multipath interference canceling apparatus 1600 returns to step S5, and the FIR filter 1500 executes computation using corrected variable gain R (i, j, m).

In this way, the multipath interference canceling apparatus 1600 repeats the processing loop comprising steps S5-S6-S7-S8-S9-S10-S11-S14-S15-S16-S5 until the subcarrier number reaches 8. By this means, error value E (i, k, m) can be reduced as subcarrier number k increases and an interference component is canceled in proportion to the size of subcarrier number k, and a hard decision value F (i, k, m) with a small error rate can be output in step S9.

Eventually, when processing has been completed for all 8 subcarriers, a negative result is obtained in step S10 and the processing flow proceeds to step S12, in which subcarrier number k is restored to 0 and repetition count value m is incremented. Then, in step S13, it is determined whether or not repetition count value m is less than a set maximum value Mmax, and if m is less than Mmax, the processing flow proceeds to step S14. The processing loop comprising steps S5-S6-S7-S8-S9-S10-S11-S14-S15-S16-S5 is then repeated until the subcarrier number reaches 8, in the same way as described above. Eventually, when the number of repetitions reaches Mmax, the processing flow proceeds to step S17 and reception processing for the i'th OFDM signal is terminated.

In this way, the multipath interference canceling apparatus 1600 sequentially converges variable gain R (i, j, k, m) using double loops based on repetition count m and subcarrier number k. By this means error E (i, k, m) is gradually reduced, and in line with this the number of hard decision value F (i, k, m) errors decreases and error E (i, k, m) can also be made progressively smaller. As a result, interference area received signals can be made to approach a distortion-free waveform, and interference due to multipath transmission can be suppressed.

Moreover, only interference-time-domain signals are corrected in the multipath interference canceling apparatus 1600, and therefore received signals from j=n+1 onward-that is, non-interference area received signals-can be left unchanged at R (i, j, k, m) = R (i, j, k, 0). As a result, interference components can be canceled by correcting only interference area received signals, enabling the amount of computational processing by the adaptive algorithm section 1608 to be reduced, and interference components to be canceled in a short time and efficiently.

Thus, according to this embodiment, the FFT range is divided into an interference area and non-interference area, Fourier transform processing is carried out separately for the interference area and non-interference area, and interference area signals r (i, 0) and r (i, 1) are corrected so as to converge the error between replica signals x (i, k) generated from post-decoding signals and pre-detection signals v (i, k) using an adaptive algorithm, thereby enabling interference to be canceled effectively for a path with a long delay time that exceeds the guard interval.

In this embodiment, a case has been described in which an FIR filter 1500 and serial/parallel conversion section 1601 are provided as a first Fourier transform processing section that performs Fourier transform processing on interference area signals, and an FFT processing section 1602 is provided as a second Fourier transform processing section that performs Fourier transform processing on non-interference area signals, but the present invention is not limited to this, and it is also possible for interference area and non-interference area signal sampling signals to be input together as FIR filter variable gain, and for that FIR filter variable gain to be corrected by means of an adaptive algorithm.

By so doing, it is possible to provide the Fourier transform processing section with a fundamental Fourier transform processing function, in which a sampled received signal is divided into a plurality of subcarrier signals, and also with a function as a filter that cancels an interference component (hard decision error component) that appears as an error value between a replica signal and a signal that has undergone Fourier transform processing.

(Embodiment 5)

In this embodiment, a case is described in which the processing procedure of the adaptive signal processing performed by the multipath interference canceling apparatus 1600 described in Embodiment 4 is modified. In the adaptive signal processing procedure of Embodiment 4 shown in FIG.21, an adaptive algorithm is executed using subcarriers in low-to-high number order. In the adaptive signal processing of this embodiment, on the other hand, note is taken of the fact that the more convergence is in the correct direction in the early stages of convergence, the greater is the improvement in convergence characteristics, and a sequential adaptive algorithm is executed with subcarriers arranged in order starting with the most probably correct one (that is, the one with the highest reliability).

In this embodiment, in consideration of the fact that the probability of a hard decision value being correct is higher for a subcarrier with a large reception amplitude, subcarrier reception levels are first measured and ranked, and the adaptive algorithm is executed on the subcarriers in high-to-low reception level order, thereby improving convergence characteristics (reduction of the number of repetitions or effectiveness of interference suppression). Here, the example of reception level has been taken, but an indicator such as SIR (Signal to Interference Ratio) or the like may also be used; essentially, anything that indicates a subcarrier of high reliability may be used. The same also applies to embodiments described hereinafter.

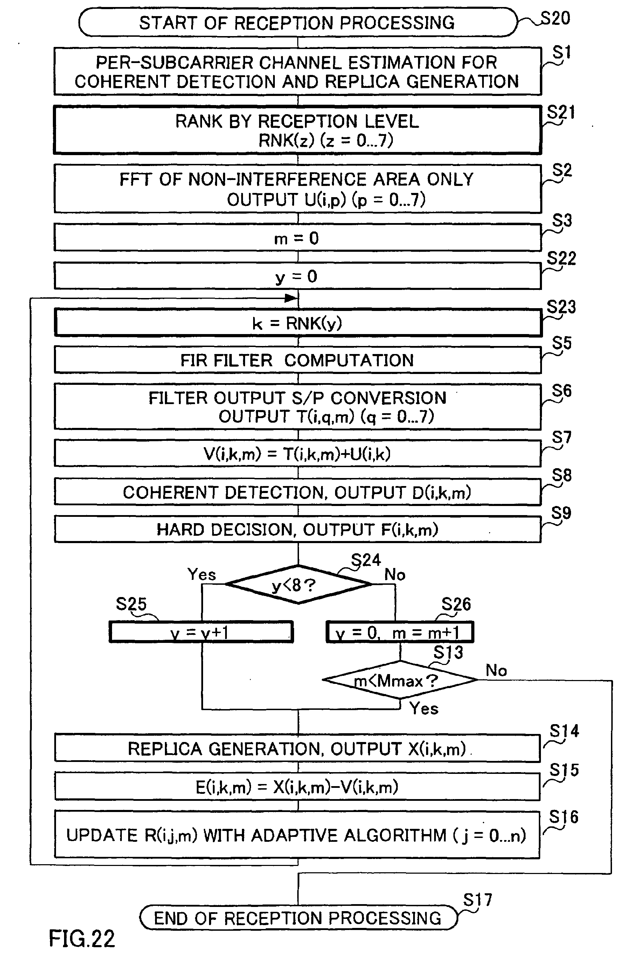

FIG.22 shows the adaptive signal processing procedure of this embodiment. Processing steps in FIG.22 corresponding to those in FIG.21 are assigned the same codes as in FIG.21, and explanations of these processing steps are omitted from the following description.

After starting reception processing for the i'th OFDM symbol in step S0, the multipath interference canceling apparatus 1600 proceeds via step S1 to step S21. In step S21, the reception level of each subcarrier is measured, and then subcarriers are arranged in high-to-low reception level order, and this is stored as rank information RNK(z) (where z = 0 to 7). These subcarrier reception levels may be estimated based on a pilot signal superimposed on each subcarrier by a channel estimation section (not shown), for example.

The processing flow then proceeds via step S3 to step S22, in which variable y (ranking order) is set to 0. In step S23, the number, k, of the subcarrier subject to adaptive algorithm processing this time is set to the ranking RNK (y) item indicated by variable y.

In step S24, it is determined whether adaptive algorithm processing has been completed for all the subcarriers by determining whether or not the ranking order is less than 8, and in step S25, the ranking order is incremented. In step S26, repetition count value m is incremented and the ranking order is reset to 0.

Thus, according to this embodiment, in addition to the configuration in Embodiment 4, sequential adaptive signal processing is executed with subcarriers arranged in order starting with the highest-reliability subcarrier, thereby enabling convergence to be set in the correct direction in the early stages of the adaptive algorithm. As a result, in addition to the effects of Embodiment 4, the convergence properties of the adaptive algorithm are improved, thereby making it possible to achieve the effects of enabling the number of adaptive algorithm repetitions to be decreased, and enabling residual error to be significantly reduced.

(Embodiment 6)

In this embodiment, a separate mode is described in which the processing procedure of the adaptive signal processing performed by the multipath interference canceling apparatus 1600 described in Embodiment 4 is modified. In this embodiment, only subcarriers of high reliability are used in convergence. Specifically, adaptive signal processing is performed using only subcarriers with a large reception amplitude.

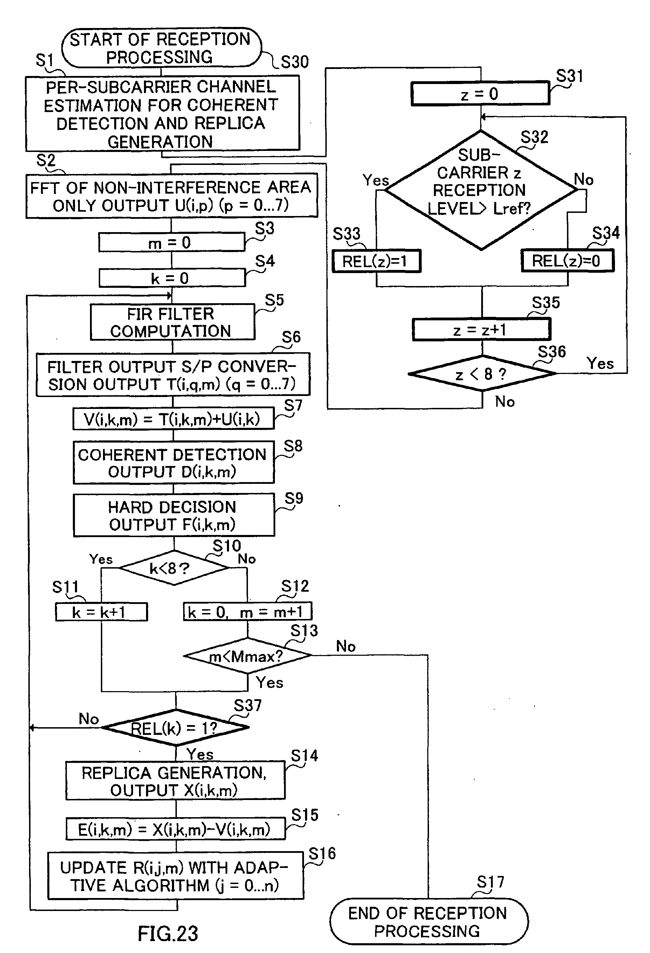

FIG.23 shows the adaptive signal processing procedure according to this embodiment. Processing steps in FIG.23 corresponding to those in FIG.21 are assigned the same codes as in FIG.21, and explanations of these processing steps are omitted from the following description.

After starting reception processing for the i'th OFDM symbol in step S30, the multipath interference canceling apparatus 1600 proceeds via step S1 to step S31, in which it sets variable z indicating the subcarrier number to 0, and then proceeds to step S32. In step S32, the reception level of subcarrier z is compared with a threshold Lref. If the reception level is greater than or equal to threshold Lref, the processing flow proceeds to step S33 and "1" is stored as threshold decision result REL(z) for subcarrier z. If the reception level is less than threshold Lref, the processing flow proceeds to step S34 and "0" is stored as threshold decision result REL (z). The threshold decision and storage of the threshold decision result are carried out by the control section (not shown) of the multipath interference canceling apparatus 1600.

Subcarrier number z is then incremented in step S35, and in step S36 it is determined whether or not subcarrier number z is less than 8. Threshold decisions are then made for all 8 subcarriers by repeating processing steps S31-S32-S33 (or S34) -S35-S36-S31 until a negative result is obtained in step S36.

Then, when threshold decisions have been made for all the subcarriers, the processing flow proceeds from step S36 to step S2, and thereafter the same kind of processing is performed in step S3 through step S13 as in Embodiment 4. In step S37, it is determined whether or not threshold decision result REL(k) for subcarrier k currently subject to adaptive algorithm processing indicates a value greater than or equal to the threshold, and in the case of a subcarrier for which the value is less than the threshold, adaptive algorithm convergence processing in steps S14, S15, and S16 is not performed, and the processing flow returns to step S5.

Thus, according to this embodiment, in addition to the configuration in Embodiment 4, only subcarriers of high reliability (subcarriers for which the hard decision value is probably correct) are used in adaptive signal processing. As a result, in addition to the effects of Embodiment 4, the convergence properties of the adaptive algorithm are improved, thereby making it possible to achieve the effects of enabling the number of adaptive algorithm repetitions to be decreased, and enabling residual error to be significantly reduced. With regard to convergence properties, a significantly greater improvement is achieved than in Embodiment 5.

(Embodiment 7)

In this embodiment, in contrast to Embodiment 6, instead of selecting and using subcarriers whose reception level is greater than or equal to a certain threshold, a predetermined number of subcarriers only are selected starting with the one with the highest reception level. As a result, in addition to being able to use only subcarriers whose hard decision value is probably correct, the amount of computation can be kept constant at all times.

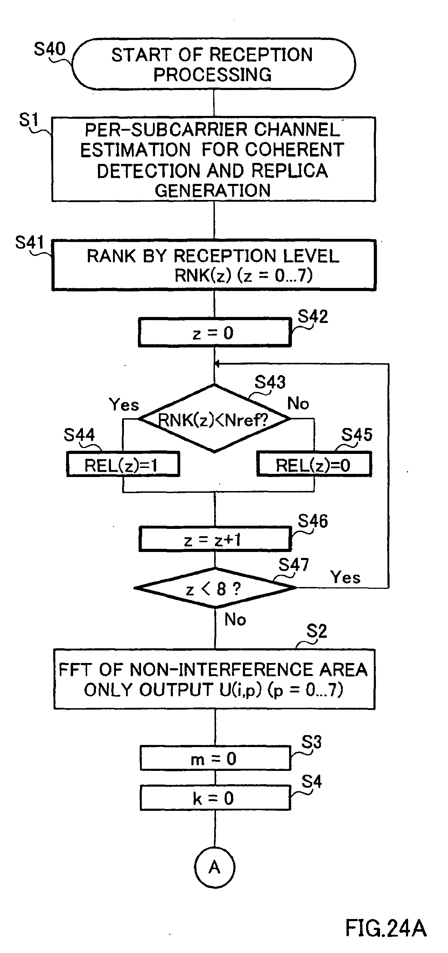

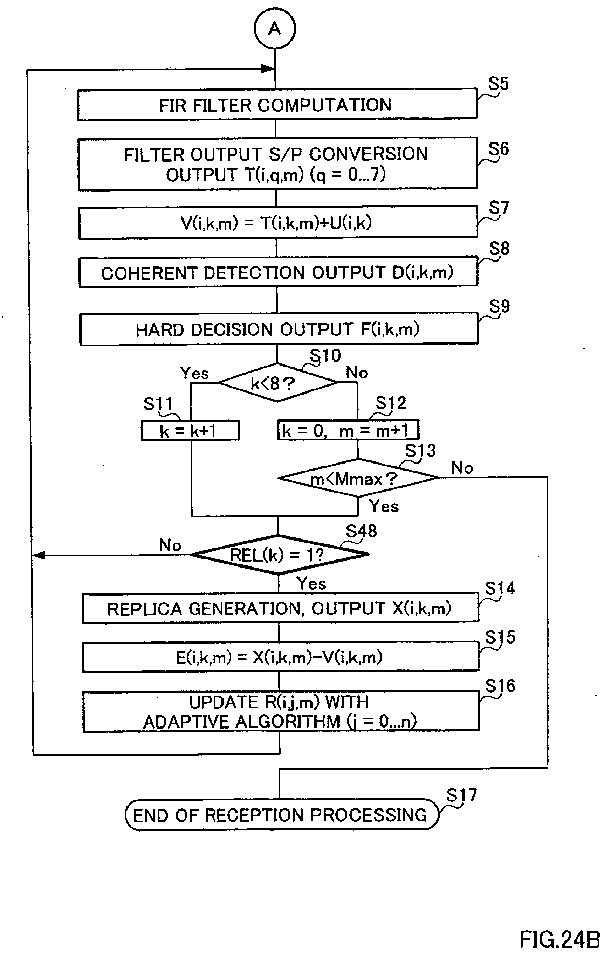

FIG.24A and FIG.24B shows the adaptive signal processing procedure according to this embodiment. Processing steps in FIG.24A and FIG.24B corresponding to those in FIG.21 are assigned the same codes as in FIG. 21, and explanations of these processing steps are omitted from the following description.

After starting reception processing for the i'th OFDM symbol in step S40, the multipath interference canceling apparatus 1600 proceeds via step S1 to step S41. In step S41, the reception level of each subcarrier is measured, and then subcarriers are arranged in high-to-low reception level order, and this is stored as rank information RNK (z) (where z = 0 to 7).

In step S42, subcarrier number z is set to 0, and then in step S43 it is determined whether or not the rank of subcarrier z is within the top Nref number. If the rank is within the top Nref number, the processing flow proceeds to step S44 and 1 is set as the REL(z) flag. If the rank is not within the Nref number, the processing flow proceeds to step S45 and 0 is set as the REL(z) flag. That is to say, REL(z) is a flag indicating whether the subcarrier is probably correct, and if REL(z) is 1 a subcarrier is a probably dependable subcarrier within the top Nref subcarriers. Nref is the number of subcarriers used in adaptive signal processing.

Subcarrier number z is then incremented in step S46, and in step S47 it is determined whether or not subcarrier number z is less than 8. It is then determined for all 8 subcarriers whether the subcarrier is a probably dependable subcarrier within the top Nref subcarriers by repeating processing steps S43-S44 (or S45) -S46-S47-S43 until a negative result is obtained in step S47.

Then, when decisions have been made for all the subcarriers, the processing flow proceeds from step S47 to step S2, and thereafter the same kind of processing is performed in step S3 through step S13 as in Embodiment 4. In step S48, it is determined whether or not subcarrier k currently subject to adaptive algorithm processing is a probably dependable subcarrier within the top Nref number of subcarriers. If subcarrier k is a probably dependable subcarrier within the top Nref number of subcarriers, adaptive algorithm processing in steps S14, S15, and S16 is performed, and that subcarrier is used in algorithm convergence processing. If, on the other hand, subcarrier k is not a probably dependable subcarrier within the top Nref number of subcarriers, adaptive algorithm processing is not performed for that subcarrier, and the processing flow returns to step S5.

Thus, according to this embodiment, in addition to the configuration in Embodiment 4, only a predetermined number of subcarriers from among those with the highest reliability are selected for use in adaptive signal processing. As a result, in addition to the effects of Embodiment 4, the convergence properties of the adaptive algorithm are improved, thereby making it possible to achieve the effects of enabling the number of adaptive algorithm repetitions to be decreased, and enabling residual error to be significantly reduced. Moreover, in comparison with Embodiment 6, the amount of computation can be kept constant.

(Embodiment 8)

In this embodiment, note is taken of the fact that, as the number of times repetition is performed increases, even a subcarrier signal that initially has a low probability of dependability can be expected to gradually improve in probability of dependability through the process of convergence. In this embodiment, in addition to the processing in Embodiment 6 and Embodiment 7, it is proposed that the number of subcarriers used in adaptive signal processing be increased as the number of repetitions is increased.

To consider the processing in Embodiment 6, for example, as the number of repetitions m is increased, the threshold for determining the reception level of each subcarrier can be lowered; or to consider the processing in Embodiment 7, as the number of repetitions m is increased, the number of subcarriers selected can also be increased.

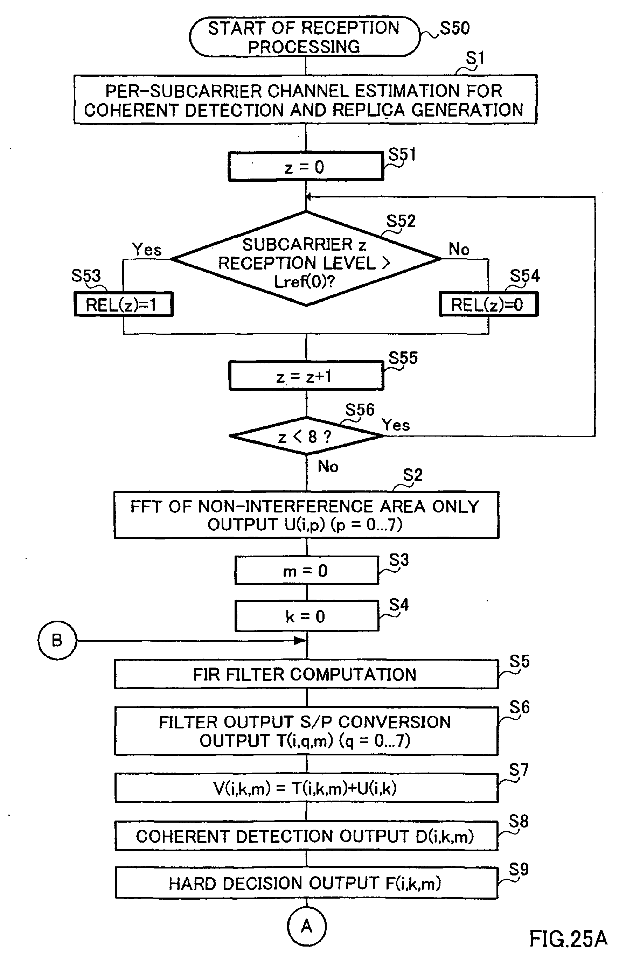

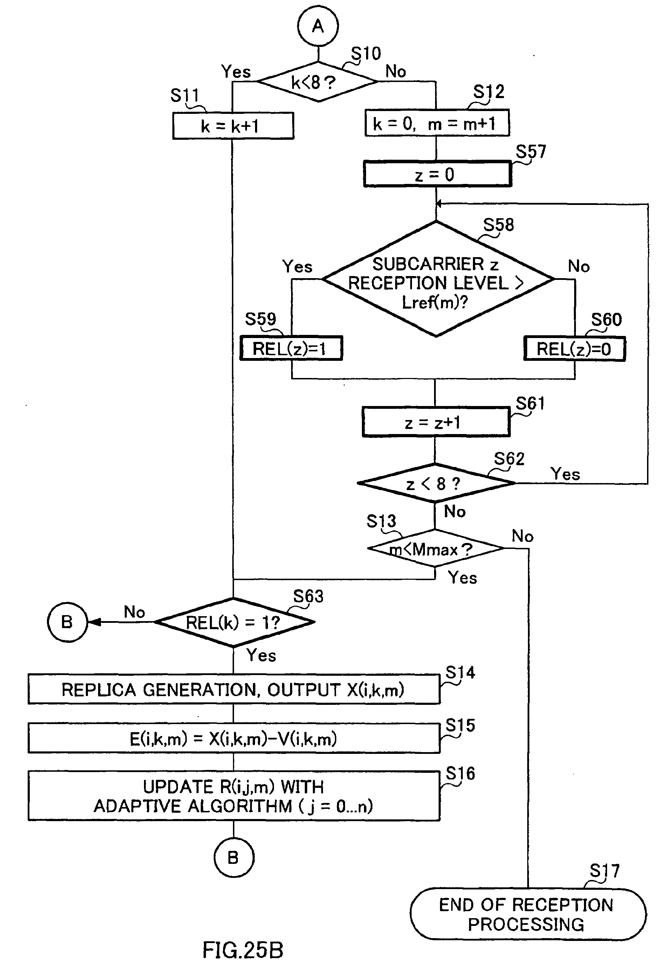

FIG.25A and FIG.25B shows the processing when the concept of this embodiment is applied to the adaptive signal processing described in Embodiment 6. That is to say, after starting reception processing for the i'th OFDM symbol in step S50, a multipath interference canceling apparatus 1600 according to this embodiment proceeds via step S1 to step S51, in which it sets variable z indicating the subcarrier number to 0, and then proceeds to step S52.

In step S52, the reception level of subcarrier z is compared with a threshold Lref (0). If the reception level is greater than or equal to threshold Lref (0), the processing flow proceeds to step S53 and flag 1 is stored as threshold decision result REL (z) for subcarrier z. If the reception level is less than threshold Lref (0), the processing flow proceeds to step S54 and flag 0 is stored as threshold decision result REL (z). Subcarrier number z is then incremented in step S55, and in step S56 it is determined whether or not subcarrier number z is less than 8. Threshold decisions are then made for all 8 subcarriers by repeating processing steps S52-S53 (or S54) -S55-S56-S52 until a negative result is obtained in step S56.

Then, when threshold decisions have been made for all the subcarriers, the processing flow proceeds from step S56 to step S2, and thereafter the same kind of processing is performed in step S3 through step S11 as in Embodiment 4. In step S63, it is determined whether flag 1 indicating that threshold decision result REL (k) for subcarrier k currently subject to adaptive algorithm processing has been set, and in the case of a subcarrier for which the value is less than the threshold, adaptive algorithm convergence processing in steps S14, S15, and S16 is not performed, and the processing flow returns to step S5.

In addition to this, in this embodiment, after repetition count value m has been incremented in step S12, the processing flow proceeds to step S57, and then the reception level of each subcarrier is compared with threshold Lref (m) in accordance with number of repetitions m by repeating step S58 through step S62. Specifically, variable z indicating the subcarrier number is set to 0 in step S57, and the processing flow proceeds to step S58.

In step S58, the reception level of subcarrier z is compared with threshold Lref(m). If the reception level is greater than or equal to threshold Lref (m), the processing flow proceeds to step S59 and flag 1 is stored as threshold decision result REL(z) for subcarrier z. If the reception level is less than threshold Lref(m), the processing flow proceeds to step S60 and flag 0 is stored as threshold decision result REL(z).

Subcarrier number z is then incremented in step S61, and in step S62 it is determined whether or not subcarrier number z is less than 8. Threshold decisions are then made for all 8 subcarriers by repeating processing steps S58-S59 (or S60) -S61-S62-S58 until a negative result is obtained in step S62. Then, when threshold decisions have been made for all the subcarriers, the processing flow proceeds from step S62 to step S13.

For threshold Lref (m), the larger the value of number of repetitions m, the smaller is the threshold selected, and as a result, as number of repetitions m increases, the more likely it becomes that an affirmative result will be obtained in step S63, and thus the greater becomes the number of subcarriers used in convergence.

Thus, according to this embodiment, in addition to the processing in Embodiment 6 and Embodiment 7, the number of subcarriers used in adaptive signal processing is increased as number of repetitions m is increased. As a result, the convergence properties of the adaptive algorithm can be improved to a significantly greater degree than in Embodiment 6 or Embodiment 7, the number of adaptive algorithm repetitions can be further decreased, and the effectiveness of interference suppression can be further improved.

(Embodiment 9)

In this embodiment, in addition to the processing of Embodiments 4 through 8, correction is further carried out on a non-interference area by means of adaptive signal processing. By this means, it becomes possible to eliminate the effects of noise, etc., in a non-interference area, thereby enabling decoded results with a significantly lower error rate to be obtained.

Possibilities for the update range here include a method implemented for the entire non-interference area, a method implemented for an entire OFDM symbol, and a method implemented sequentially with the non-interference area divided into a number of blocks.

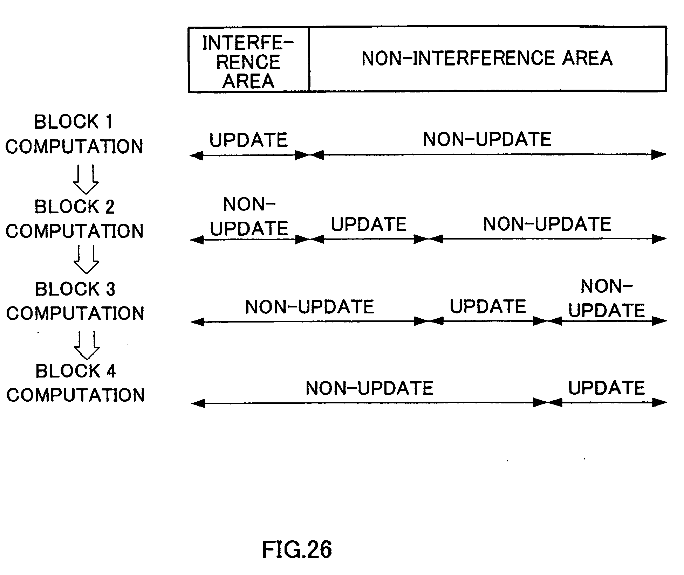

FIG.26 shows an example of a method implemented sequentially with the non-interference area divided into a number of blocks. Here, j = 0 to n (interference area) received signals are updated by any of the methods in Embodiments 4 through 8 (block 1 computation), then the range from j = (n+1) to (2n+1) is taken as the update range, and this signal only is updated by adaptive signal processing (block 2 computation), and updating proceeds successively with j = 2 (n+1) to (3n+2) and so on.

To consider an actual configuration for performing this kind of processing, in the multipath interference canceling apparatus 1600 in FIG.20 update area sampling signals are input to an FIR filter 1500 and non-update area sampling signals are signal to an FFT processing section 1602. The update area sampling signals input to the FIR filter 1500 can then be corrected using the same kind of adaptive algorithm processing as in above-described Embodiments 4 through 8.

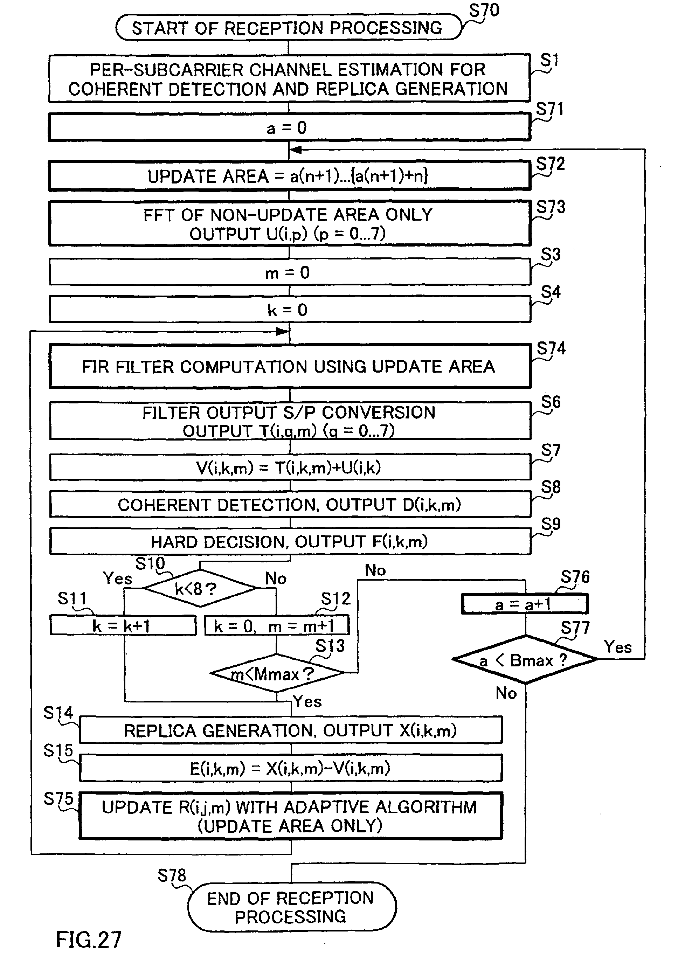

FIG.27 shows the adaptive signal processing procedure according to this embodiment. Processing steps in FIG.27 corresponding to those in FIG.21 are assigned the same codes as in FIG.21, and explanations of these processing steps are omitted from the following description.

After starting reception processing for the i'th OFDM symbol in step S70, the multipath interference canceling apparatus 1600 proceeds via step S1 to step S71. In step S71 update area number a is reset, then the processing flow proceeds to step S72. In step S72, update area sampling signals are set from sampling signal $a \times (n+1)$ to sampling signal $a \times (n+1)+n$. Then in step S73, signals U (i, p) of each subcarrier are formed from non-update area sampling signals only, by having the FFT processing section 1602 perform FFT processing on non-update area sampling signals.

In step S74, signals T (i, q, m) of each subcarrier are formed sequentially from update area sampling signals only, by having the FIR filter 1500 perform computations with an FFT known coefficient as input and an update area sampling signal as variable gain. In step S75, an adaptive algorithm section 1608 corrects FIR filter 1500 variable gain (that is, update area sampling signal) R (i, j, m) so that error value E (i, k, m) is decreased, and this is sent to the FIR filter 1500.

In this way, the multipath interference canceling apparatus 1600 executes adaptive algorithm processing using all the subcarriers for update area sampling signals by repeating the processing loop comprising steps S74-S6-S7-S8-S9-S10-S11-S14-S15-S75-S74 until the subcarrier number reaches 8.

When the multipath interference canceling apparatus 1600 executes such processing m times, the processing flow proceeds from step S13 to step S76 in which update area number a is incremented, then the processing flow returns via step S77 to step S72, and an interference component of the next update area is canceled by repeating the same kind of processing as described above for that next update area.

When a negative result is eventually obtained in step S77, this means that adaptive signal processing has been completed for all the update areas and interference components have been canceled in all the update areas. The processing flow then proceeds to step S78 and i'th OFDM symbol reception processing is terminated. In FIG.27, if the number of blocks (number of update areas) is designated Bmax, and assuming, for example, that the number of OFDM symbol FFT samples is 8, and n=2, then Bmax=8/2=4.

Thus, according to this embodiment, FIR filter processing and serial/parallel conversion processing are carried out on non-interference area signals as well as on interference area signals, and correction is performed adaptively for values of non-interference area signals as well as interference area signals. By this means, it becomes possible to eliminate the effects of noise, etc., effectively in a non-interference area, thereby enabling decoded data with a significantly lower error rate to be obtained.

(Embodiment 10)

In this embodiment, after the kind of interference area updating described in Embodiment 9 is finished, updating is further performed for the entire OFDM symbol by means of adaptive signal processing. When a replica is created at this time, the replica is normalized. By this means, it is possible not only to achieve multipath interference canceling, but also to eliminate the effects of frequency selective fading.

In above-described Embodiments 4 through 9, the updated signals are part of an OFDM symbol, and therefore replica generation is performed with the inclusion even of amplitude fluctuations added in the channel for each subcarrier, but if the entire OFDM symbol is updated, it is possible to correct even amplitude fluctuations due to frequency selective fading that differ for each subcarrier. As a result, signal quality is balanced across the subcarriers, and error rate characteristics can be significantly improved.

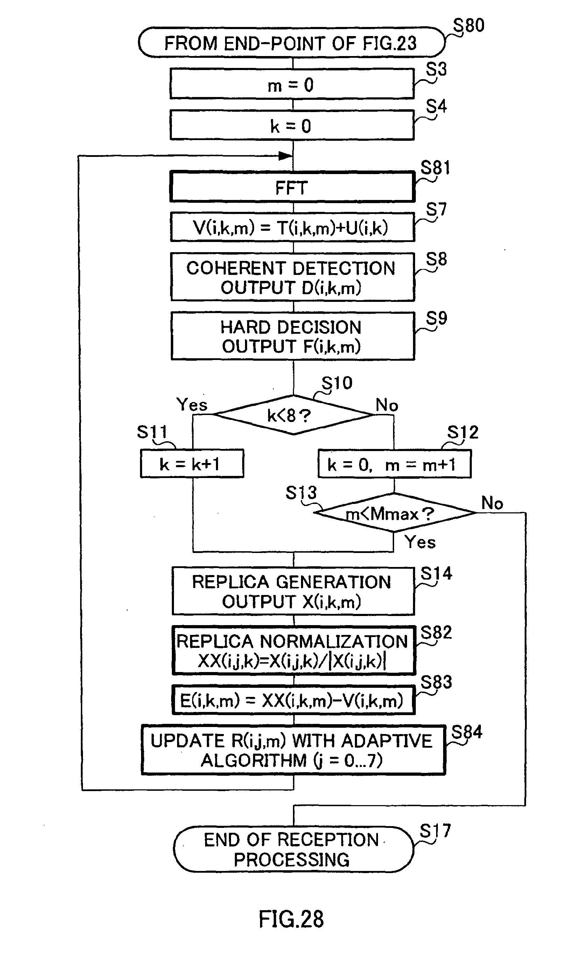

FIG.28 shows the adaptive signal processing procedure according to this embodiment. Processing steps in FIG.28 corresponding to those in FIG.21 are assigned the same codes as in FIG.21, and explanations of these processing steps are omitted from the following description.

In the adaptive signal processing procedure according to this embodiment, after the processing shown in FIG. 27 is finished-that is, when a negative result is obtained in step S77-the processing flow proceeds to step S80. In step S81, FFT processing is carried out on all the sampling signals of the i'th OFDM symbol. Specifically, all sampling signals r (i, 0) through r (i, 7) are input to an FIR filter 1500.

In step S82 a replica signal generated in step S14 by a replica generating section 1606 is normalized, and in step S83 error E (i, k, m) between normalized replica signal XX (i, k, m) and post-Fourier-transform signal V (i, k, m) is found by a subtracter 1607. In step S84, an adaptive algorithm section 1608 sends to the FIR filter 1500 a signal ordering the correction of sampling signals r (i, 0) through r (i, 7) used as FIR filter 1500 variable gain so that error E (i, k, m) is decreased.

Thus, according to this embodiment, in addition to enabling interference components due to multipath transmission to be canceled by means of the same kind of processing as in Embodiments 4 through 9, it is also possible to eliminate the effects of frequency selective fading by performing adaptive algorithm processing that reduces the error between a normalized replica signal and a signal that has undergone Fourier transform processing.

(Embodiment 11)

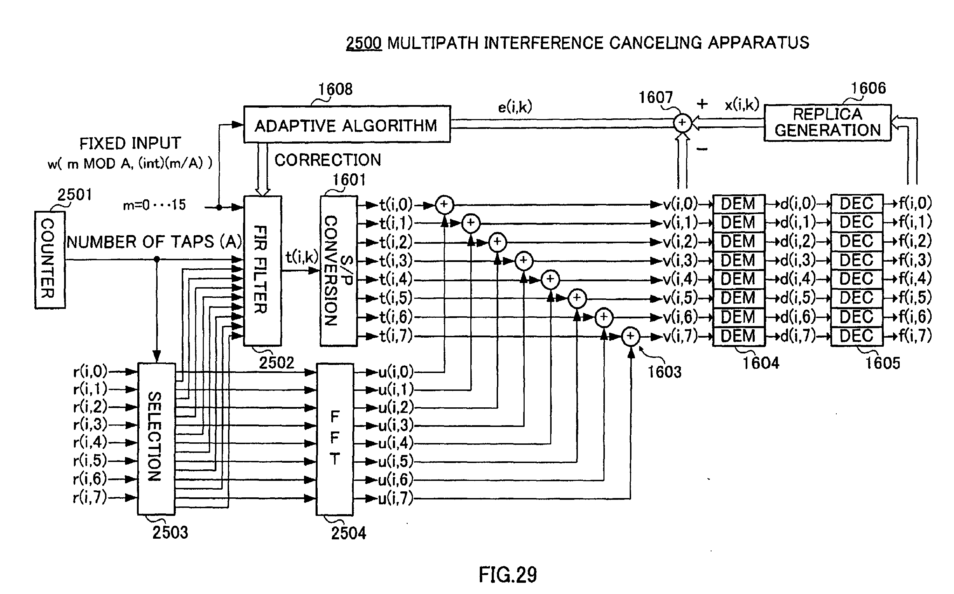

FIG.29, in which parts corresponding to those in FIG.20 described in Embodiment 4 are assigned the same codes as in FIG.20, shows the configuration of a multipath interference canceling apparatus 2500 according to this embodiment. In this multipath interference canceling apparatus 2500, sampling signals r (i, j) are not divided into an interference area and non-interference area, but are input to a selection section 2503. The selection section 2503 sends to an FIR filter 2502 a number of sampling signals r (i, j) equivalent to the count value of a counter 2501, and sends the remaining sampling signals r (i, j) to an FFT processing section 2504.

The FIR filter 2502 basically has a similar configuration to the FIR filter 1500 shown in FIG.19, and performs FIR filter computations, taking as inputs sampling signals sent from the selection section 2503 as variable gain, and fixed input or input of values corrected by an adaptive algorithm section 1608. However, the FIR filter 2502 is set to a number of taps (A) in accordance with the count value from the counter 2501, and performs FIR computations with a number of sampling signals equivalent to the count value input from the selection section 2503 as variable gain.

That is to say, whereas in Embodiments 4 through 10 the number of FIR filter taps was fixed, in this embodiment the number of taps is variable. The number of taps (A) is varied in accordance with the count value of the counter 2501. In this embodiment, the count value is incremented by 1 each time correction by the adaptive algorithm section 1608 finishes. However, incrementation by 1 is only an example, and is not a limitation.

In the selection section 2503, either r (i,*) or 0 is selected as output to the FIR filter 2502 and FFT processing section 2504, according to count value A. For example, if A=2, sampling signal r (i, 0) is output to the FIR filter 2502, and 0 is output to the FFT processing section 2504. Sampling signal r (i, 1), also, is output to the FIR filter 2502, while 0 is output to the FFT processing section 2504. However, since A=2, sampling signal r (i, 2) is output to the FFT processing section 2504, while 0 is output to the FIR filter 2502. At this time, sampling signals r (i, 3) through r (i, 7) are also output to the FFT processing section 2504, while 0 is output to the FIR filter 2502. When A reaches 3, sampling signal r (i, 2) is output to the FIR filter 2502.

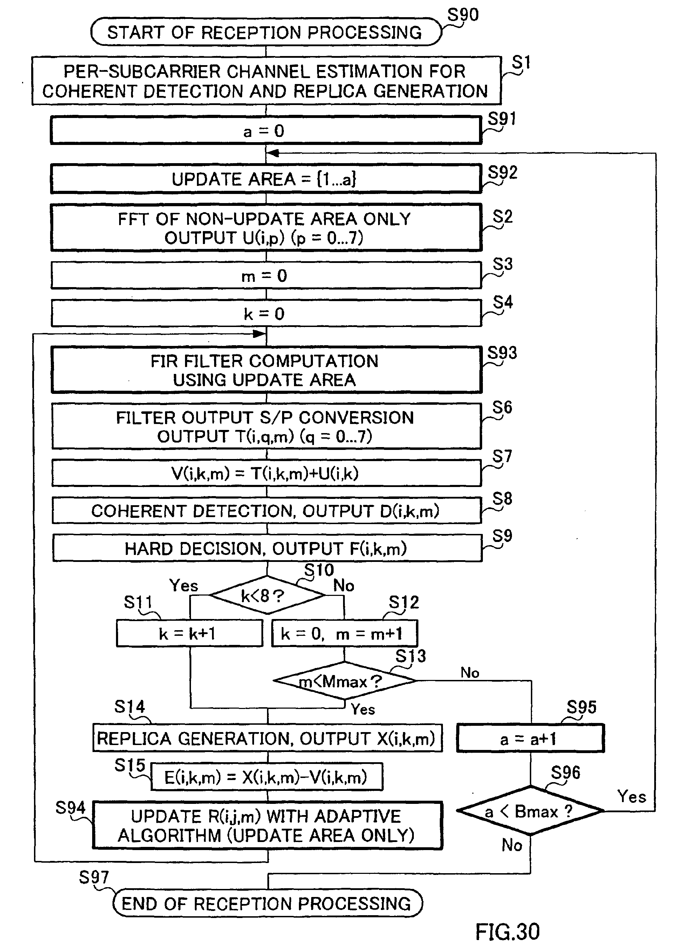

FIG.30 shows the processing procedure of the multipath interference canceling apparatus 2500. Processing steps in FIG.30 corresponding to those in FIG.21 are assigned the same codes as in FIG.21, and explanations of these processing steps are omitted from the following description.

After starting reception processing for the i'th OFDM symbol in step S90, the multipath interference canceling apparatus 2500 proceeds via step S1 to step S91. In step S91, counter 2501 count value a is reset, and the processing flow then proceeds to step S92.

In step S92, the selection section 2503 sends to the FIR filter 2502 a number of sampling signals r (i, *) equivalent to count value a, and sends the remaining sampling signals to the FFT processing section 2504. By this means, the sampling signals output to the FIR filter 2502 are made update areas.

In step S93, the multipath interference canceling apparatus 2500 performs an FIR filter computation using an update area. That is to say, the sampling signal currently used as an update area is taken as variable gain, and FIR filter processing is carried out on fixed input or corrected input from the adaptive algorithm section 1608. In step S94, the adaptive algorithm section 1608 updates FIR filter 2502 variable gain (that is, update area sampling signal) R (i, j, m) so that error value E (i, k, m) is decreased.

When the multipath interference canceling apparatus 2500 has sufficiently reduced error value E (i, k, m) of an update area by performing processing repeatedly on the sampling signal of that update area Mmax times, the processing flow proceeds from step S13 to step S95. In step S95 the update area sampling signal is made 1 higher by incrementing counter 2501 count value a, and if an affirmative result is then obtained in step S96, the processing flow returns to step S92.

From step S92 onward, error value E (i, k,m) of a new update area is sufficiently reduced by repeating the same kind of processing as described above on that update area for which the sampling signals have increased. Eventually, when processing ends for all the set update areas, a negative result is obtained in step S96, the processing flow proceeds to step S97, and reception processing (interference cancellation processing) is terminated for the OFDM symbol that was subject to processing.

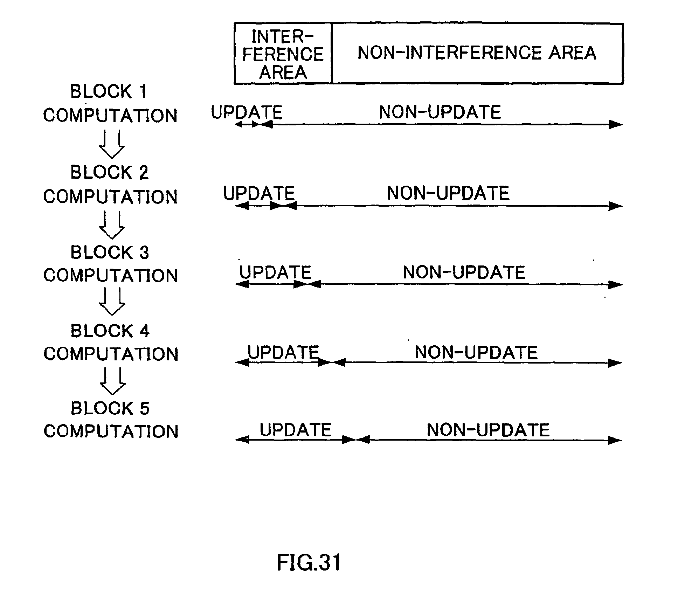

FIG.31 shows the setting arrangement for update areas in the multipath interference canceling apparatus 2500 of this embodiment (that is, the range of sampling signals input to the FIR filter 2502). As can be seen from the figure, the multipath interference canceling apparatus 2500 does not divide OFDM signal interference and non-interference areas, but cancels an OFDM signal interference component by sequentially enlarging the update area.

As a result, it is not necessary to perform the delay time length measurement necessary when dividing interference and non-interference areas, enabling the configuration to be simplified accordingly, and also allowing the execution of interference cancellation processing that is independent of the delay time length, thereby enabling interference canceling capability to be improved.

That is to say, since the accuracy of impulse response estimation is not very high with OFDM, there is a particularly high probability of error arising when seeking a low-power path. Moreover, estimation accuracy may fall even further when estimation is made difficult by the effects of momentary fading, shadowing fluctuations, or the like. In this embodiment, a received OFDM signal is processed without being divided into an interference area and non-interference area, making delay time measurement unnecessary, and avoiding susceptibility to the effects of a drop in estimation accuracy.

Furthermore, in this embodiment, the number of taps input to the FIR filter 2502 is gradually increased from a small number, enabling interference canceling capability to be significantly improved.

That is to say, if computation is performed with an unnecessarily large number of taps, performance actually degrades (for example, if the number of delay time samples is 3, computation using 8 taps results in poorer performance than computation using 3 taps), and therefore it is not possible to achieve very good performance if the number of taps is large from the start. In this embodiment this point is considered, and instead of performing computation using a large number of taps from the start, the number of taps is gradually increased. Since convergence ends when the number of taps is sufficiently large, and performance would not be changed much by further increasing the number of taps, adequate interference canceling capability can be achieved.

Thus, according to this embodiment, interference components are canceled by gradually increasing the area for which FIR filter processing and adaptive algorithm processing are performed, thereby eliminating the need for interference area and non-interference area estimation, and so enabling a multipath interference canceling apparatus 2500 with improved interference canceling capability to be achieved.

(Embodiment 12)

A special feature of this embodiment is that, when gradually increasing the area for which FIR filter processing and adaptive algorithm processing are performed as in Embodiment 11, FIR filter processing and adaptive algorithm processing for a particular OFDM symbol are terminated at the point at which there cease to be errors in the decoded data.

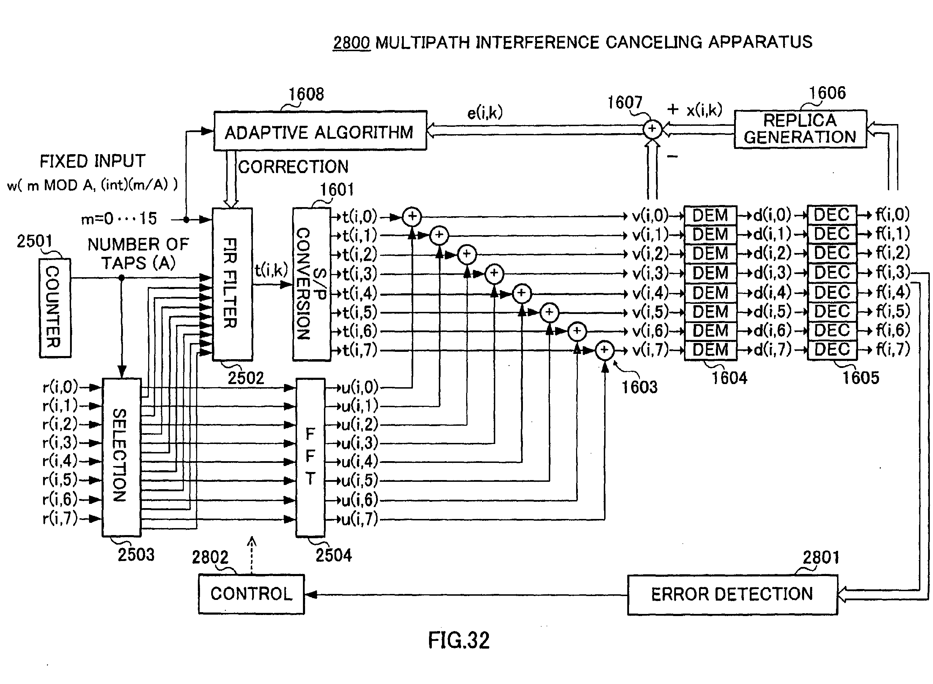

FIG.32, in which parts corresponding to those in FIG.29 described in Embodiment 11 are assigned the same codes as in FIG.29, shows the configuration of a multipath interference canceling apparatus 2800 according to this embodiment. In this multipath interference canceling apparatus 2800, decoded data f (i, 0) through f (i, 7) output from decoding sections (DEC) 1605 are input to an error detection section 2801.

The error detection section 2801 performs error detection using f (i, 0) through f (i, 7), and sends the detection results to a control section 2802. In the control section 2802, when an error has been detected, sampling signals r (i, 0) through r (i, 7) input to an FIR filter 2502 for the OFDM symbol currently being processed are increased, and adaptive algorithm processing is performed using the increased sampling signals. In contrast, when an error has not been detected, FIR filter processing and adaptive algorithmprocessing for the OFDM symbol currently being processed are terminated.

Various methods can be used for error detection here. In the case of this embodiment, a case where a CRC (Cyclic Redundancy Check) is performed is described as an example. That is to say, the transmitting side transmits an OFDM signal to which error detection bits have been added, and the error detection section 2801 determines whether or not the receive data is erroneous based on these error detection bits. For example, if one CRC detection bit is added to a collection of data on a same-time basis, FIR filter processing and adaptive algorithm processing can be terminated at the point at which it is learned by means of CRC detection that there is no error. Any other method may be used instead of CRC, as long as it is capable of detecting errors.

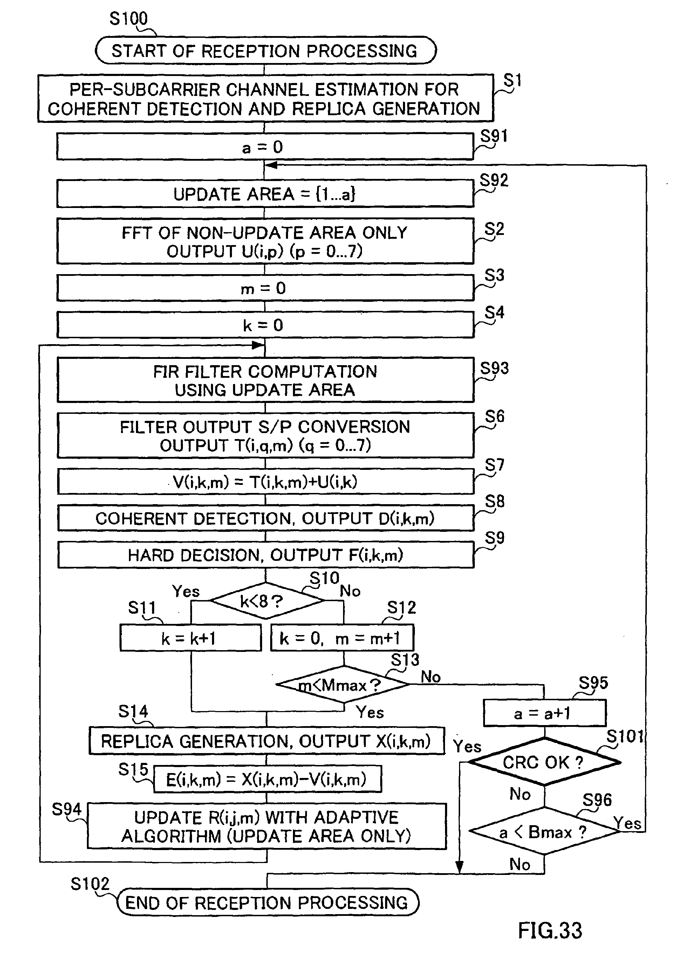

FIG.33 shows the processing procedure used by the multipath interference canceling apparatus 2800. Processing steps in FIG.33 corresponding to those in FIG.30 are assigned the same codes as in FIG.30, and explanations of these processing steps are omitted from the following description.

From step S95 to step S96, the multipath interference canceling apparatus 2800 performs the same kind of processing as the multipath interference canceling apparatus 2500 of Embodiment 11, except for the addition of processing to detect whether or not the CRC is OK. That is to say, if the CRC is not OK (if an error is detected) in step S101, the processing flow returns via step S96 to step S92, whereby FIR filter processing and adaptive algorithm processing are performed using an update area for which the sampling signal has been increased by 1. On the other hand, if the CRC is OK (if an error is not detected), the processing flow proceeds to step S102, and interference cancellation processing (reception processing) of the OFDM symbol currently being processed is terminated.

The maximum number of taps for which processing is to be performed, Bmax, is determined in step S96, and when the maximum number of taps Bmax is reached, processing is terminated for the OFDM symbol currently being processed, thus enabling unnecessary processing to be avoided in a case where errors do not cease to be present no matter how many times processing is repeated.

Thus, according to this embodiment, when the area for which FIR filter processing and adaptive algorithm processing are performed is gradually increased, FIR filter processing and adaptive algorithm processing for a particular OFDM symbol are terminated at the point at which there cease to be errors in the decoded data, thereby enabling a reduction in the average amount of computation to be achieved in addition to the effects of Embodiment 11. Also, since processing can be terminated at the point at which interference cancellation related adaptive algorithm processing has become optimal, it is possible to prevent a convergence value from diverging even a little from processing in which convergence at the optimal point is once achieved.

(Embodiment 13)

A special feature of this embodiment is that, whereas in above-described Embodiment 12 the timing at which FIR filter processing and adaptive algorithm processing are stopped for the OFDM symbol subject to processing is decided based on whether or not an error is detected in the decoded data, in this embodiment the timing at which FIR filter processing and adaptive algorithm processing are stopped is decided based on the quality of the received signal. In the case of this embodiment, the timing is decided based on the norm of an error value e.

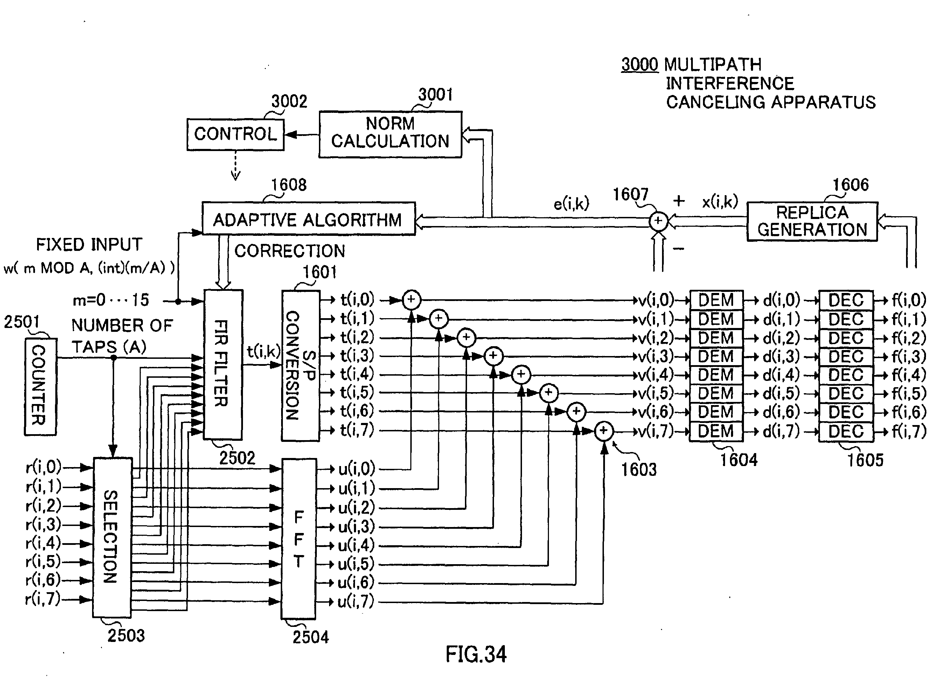

FIG.34, in which parts corresponding to those in FIG.29 described in Embodiment 11 are assigned the same codes as in FIG.29, shows the configuration of a multipath interference canceling apparatus 3000 according to this embodiment. In this multipath interference canceling apparatus 3000, differences e (i, k) between received signals v (i, 0) through v (i, 7) and replica signals x (i, 0) through x (i, 7) are input to a norm calculation section 3001.

The norm calculation section 3001 computes the norm by calculating the square of the absolute value of difference e (i, k) for all subcarriers k, and finding the sum of these calculated values. When the norm of error value e ceases to vary, or becomes larger than before, a control section 3002 terminates FIR filter processing and adaptive algorithm processing for the OFDM symbol currently being processed.

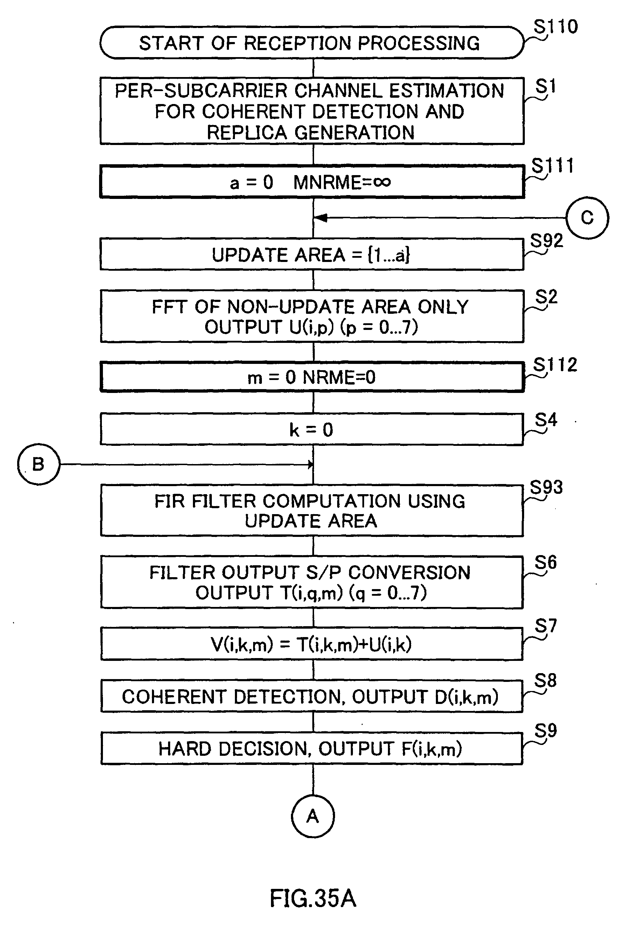

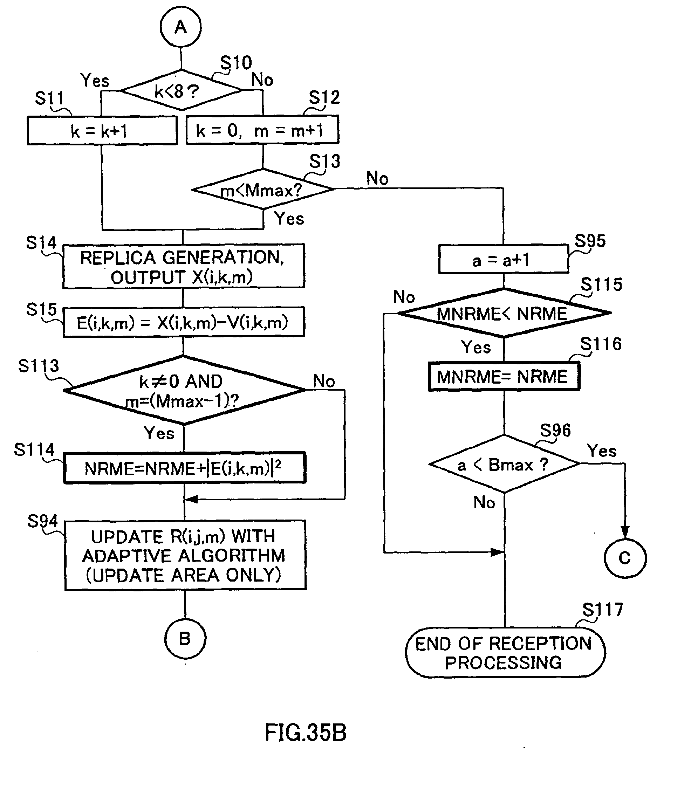

FIG.35A and FIG.35B shows the processing procedure used by the multipath interference canceling apparatus 3000. Processing steps in FIG.35A and FIG.35B corresponding to those in FIG.30 are assigned the same codes as in FIG. 30, and explanations of these processing steps are omitted from the following description.

In step S111, the multipath interference canceling apparatus 3000 sets the count value of a counter 2501 to 0, and also sets the initial value of a second norm value MNRME used when comparing the relative size of norm values to infinity. In the multipath interference canceling apparatus 3000 of this embodiment, in detection by the control section 3002 of the fact that the norm has ceased to vary or has become larger, it is necessary to hold, in addition to a first norm value NRME found by adaptive algorithm processing using the number of sampling signals at the current point in time, a second norm value MNRME found at a previous point in time using one fewer sampling signals.

In step S112, number of repetitions m is set to 0 and first norm value NRME is also set to 0. In step S113, it is determined whether or not subcarrier number k of the subcarrier currently being processed is non-zero and number of repetitions m has reached a stipulated maximum value. An affirmative result obtained here in step S112 means that the number of adaptive algorithm repetitions has reached a predetermined number, and therefore the processing flow proceeds to step S114 in this case, or to step S94 otherwise.

In step S114, the square of the absolute value of error e (i, k) for all subcarriers k is calculated ($|E (i, k, m)|^2$), and norm NRME is calculated from the sum of these values. This processing is performed so that the square of the absolute value of error e (i, k) found for the next subcarrier ($|E (i, k, m)|^2$) is sequentially added to norm NRME found up to the preceding subcarrier.

In step S115, first norm value NRME found in the current update area is compared with second norm value MNRME found in the update area of a previous point in time (that is, an area with one sampling signal fewer), and if first norm value NRME is smaller than second norm value MNRME, the processing flow proceeds to step S116. In step S116, the value of first norm value NRME is set as second norm value MNRME, then the processing flow returns via step S96 to step S92, and processing is performed to find a new norm NRME for the expanded update area.

In step S115, with regard to the initial update area, the processing flow proceeds to step S116 whatever the value of norm NRME, since an infinite value has been set as second norm value MNRME. Then, from the second update area onward, when first norm value NRME becomes equal to second norm value MNRME, or larger than second norm value MNRME, the processing flow proceeds to step S117, and reception processing (interference cancellation processing) is terminated for the OFDM symbol being processed.

In actuality, when the number of taps for which FIR filter processing and adaptive algorithm processing are performed exceeds the optimal number of taps, error e conversely gradually becomes larger. In this embodiment, this point is considered, and when the number of taps is gradually increased and the update area extended, processing is stopped when decreasing of error e ceases.

To compare the processing in this embodiment with processing in which extension of the update area is stopped when errors cease to be detected, as in above-described Embodiment 12, since termination can be effected at a number of taps close to the optimum even with CRC errors remaining, this embodiment is effective when applied to a hybrid ARQ (Automatic Repeat Request) system, for example.

With hybrid ARQ, data retransmission is performed in the event of an error, and the signal in which the error occurred is itself also stored and combined with the retransmission signal to improve performance. Considering this, it is preferable to store a signal for which the best performance has been obtained with the optimal number of taps even if there is an error, as in this embodiment.

Thus, according to this embodiment, when the area for which FIR filter processing and adaptive algorithm processing are performed is gradually increased, the timing at which FIR filter processing and adaptive algorithm processing are stopped for the OFDM symbol subject to processing is decided based on the quality (error value e) of the received signal, thereby enabling a reduction in the average amount of computation to be achieved in addition to the effects of Embodiment 11. Also, since processing can be terminated at the point at which interference cancellation related adaptive algorithm processing has become optimal, it is possible to prevent a convergence value from diverging even a little from processing in which convergence at the optimal point is once achieved.

Moreover, considering hybrid ARQ packet synthesis, it is possible to obtain a received signal with significantly better error rate characteristics than in the case of Embodiment 14.

In this embodiment, it has been assumed that the norm of an error value e is observed when measuring received signal quality, but this embodiment is not limited to this, and any kind of quality estimation method may be used that enables quality to be estimated each time the update area is enlarged.

(Embodiment 14)

This embodiment has a combination of above-described Embodiment 12 and Embodiment 13 as its basic configuration. In addition, in this embodiment error detection has top priority, and if errors cease by a certain number of taps, processing is terminated at that point, but if errors do not cease, data is stored for the number of taps determined to be optimal according to Embodiment 13. The end result is that, if errors do not cease, data of the best quality is stored.

The effect that can be obtained by this means is that the amount of computation can be reduced if errors cease while the number of taps is being increased, and data suitable for hybrid ARQ can be retained if errors do not cease.

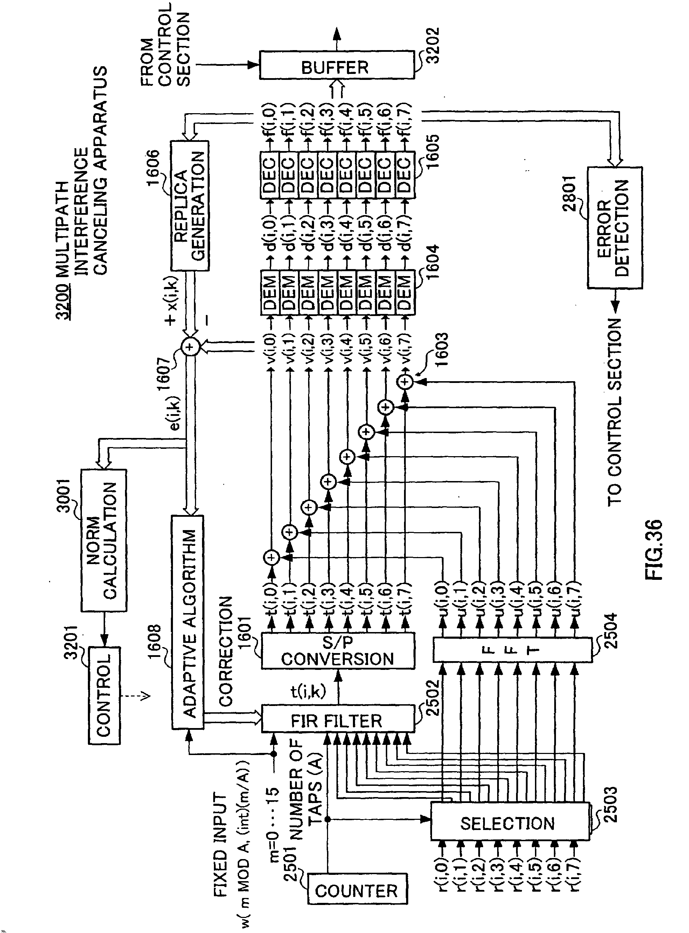

FIG.36, in which parts corresponding to those in FIG.32 and FIG.34 are assigned the same codes as in FIG. 32 and FIG.34, shows the configuration of a multipath interference canceling apparatus 3200 according to this embodiment. This multipath interference canceling apparatus 3200 has an error detection section 2801 that detects errors in decoded data, and a norm calculation section 3001 that calculates the norm of an error value e. The results of detection by the error detection section 2801 and the results of calculation by the norm calculation section 3001 are sent to a control section 3201.

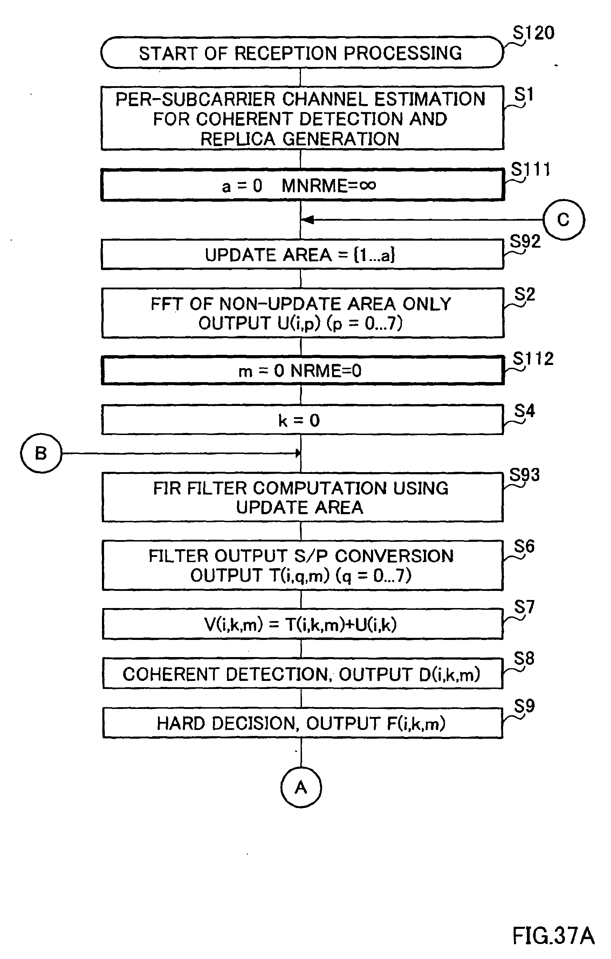

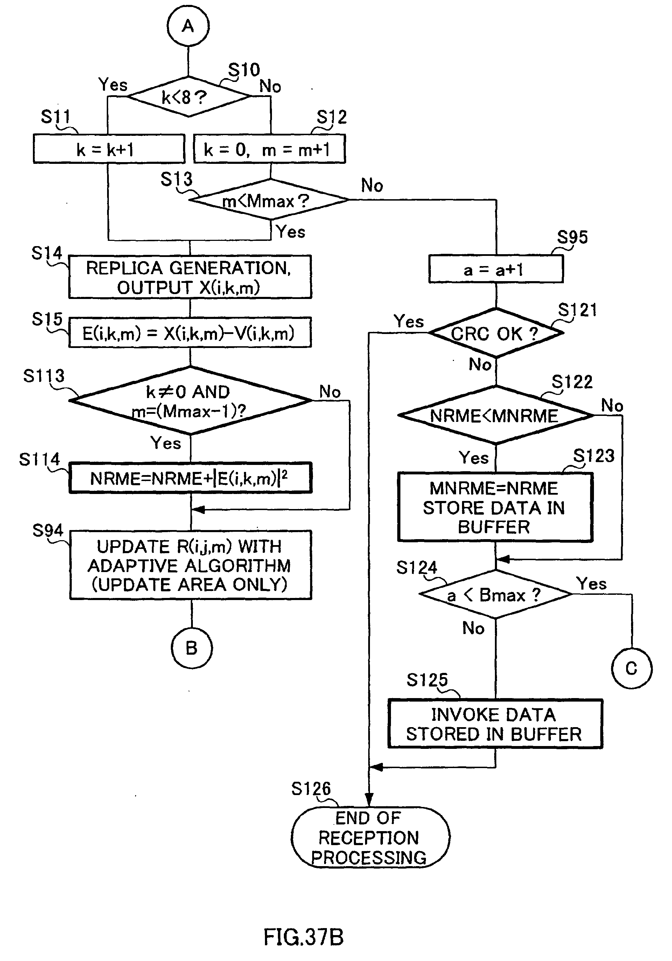

The control section 3201 controls the operation of the entire multipath interference canceling apparatus 3200 in accordance with the processing procedure shown in FIG.37A and FIG.37B. Processing steps in FIG.37A and FIG. 37B corresponding to those in FIG.33 and FIG.35A, 358 are assigned the same codes as in FIG.33 and FIG.35A, 35B, and explanations of these processing steps are omitted from the following description.

The multipath interference canceling apparatus 3200 terminates interference cancellation processing for the OFDM symbol currently being processed when errors cease to be detected (when the CRC is OK) in step S121, or when the number of taps for which FIR filter processing and adaptive algorithm processing are performed reaches a predetermined number Bmax in step S124.

Also, if an error is detected in step S121, the number of taps is increased and the same kind of processing is performed, but if it is detected in step S122 that the norm has ceased to vary or is larger than the previous time, the processing flow proceeds to step S123 and decoded data f (i, 0) through f (i, 7) at that time is stored in a buffer 3202 (FIG.36) . When it is determined in step S124 that the number of taps for which FIR filter processing and adaptive algorithm processing are performed has reached predetermined number Bmax, the decoded data stored in the buffer 3202 is then read in step S125.

That is to say, in the multipath interference canceling apparatus 3200, when errors cease to be detected during processing the decoded data at that point is used, and when errors cannot be eliminated by the end of processing, decoded data with the smallest norm during processing is used.

In this connection it may be remarked that, with hybrid ARQ, a retransmission request is sent to the communicating party if errors have not ceased. At this time, packet synthesis is performed in the receiving apparatus using the multipath interference canceling apparatus 3200, utilizing the retransmitted data (on which the same kind of interference cancellation processing may, of course, be executed) and data invoked in step S125.

Thus, according to this embodiment, when the area for which FIR filter processing and adaptive algorithm processing are performed is gradually increased, when errors cease to be detected during processing the decoded data at that point is used, and when errors cannot be eliminated by the end of processing, decoded data with the smallest norm during processing is used, thereby making it possible to achieve both a reduction in the amount of computation and an improvement in error rate characteristics.

The present invention is not limited to above-described Embodiments 1 to 14, and various variations and modifications may be possible without departing from the scope of the present invention. For example, in above Embodiment 14, the case of OFDM communication is described, but the present invention may also be similarly applied to MC-CDMA (Multicarrier-Code Division Multiple Access). Also, in above Embodiments 1 to 3, a case is described in which the number of subcarriers is 4, and in above Embodiments 4 to 14, a case is described in which the number of subcarriers is 8, but there is no limit to the number of subcarriers in the present invention.

A multipath interference canceling apparatus and multipath interference canceling method according to the present invention are applicable to a radio base station apparatus or a communication terminal apparatus such as a mobile station in a digital radio communication system.

A multipath interference canceling apparatus according to the present invention has a configuration comprising a demodulating section that obtains a demodulated signal by demodulating an information signal other than a guard interval of a multicarrier received signal in which the aforementioned guard interval is inserted, a replica generating section that generates a replica of an immediately preceding information signal using the aforementioned demodulated signal, and an impulse response estimation section that estimates the impulse response of a channel using the aforementioned received signal; wherein interference due to a path exceeding the aforementioned guard interval is canceled in the aforementioned information signal using the aforementioned impulse response and the aforementioned replica.

According to this configuration, a part in which interference is generated in a subsequent information signal by a path with a delay time longer than the guard interval is found from a replica of the previous information signal and an impulse response, and that part is eliminated from the subsequent information signal, thereby making it possible to prevent the occurrence of distortion in an information signal, and to prevent degradation of performance.

Also, since interference due to a path exceeding the guard interval can be canceled in this way, it is possible to shorten, and in some cases eliminate, the guard interval. As a result, transmission efficiency can be improved.

A multipath interference canceling apparatus according to the present invention has a configuration wherein, in the above-described configuration, the impulse response estimation section has a channel estimation section that performs channel estimation for each multicarrier carrier, and an inverse Fourier transform processing section that performs inverse Fourier transform processing on a channel estimate estimated by the aforementioned channel estimation section.

According to this configuration, it is possible to estimate an impulse response of a communication channel for which time resolution is low.

A multipath interference canceling apparatus according to the present invention has a configuration comprising a demodulating section that obtains a demodulated signal by demodulating an information signal other than a guard interval of a multicarrier received signal in which the aforementioned guard interval is inserted, a replica generating section that generates a replica of said information signal using the aforementioned demodulated signal, a first subtraction section that subtracts the aforementioned replica from the aforementioned received signal, a time window processing section that performs time window processing on output of the aforementioned first subtraction section, and a second subtraction section that subtracts output of the aforementioned time window processing section from the aforementioned received signal; wherein interference due to a path exceeding the aforementioned guard interval is canceled in the aforementioned information signal using the aforementioned impulse response and the aforementioned replica.

According to this configuration, a part in which interference is generated in a subsequent information signal by a path with a delay time longer than the guard interval is found from a replica of the previous information signal and an impulse response, and that part is eliminated from the subsequent information signal, thereby making it possible to prevent the occurrence of distortion in an information signal, and to prevent degradation of performance.

Also, since interference due to a path exceeding the guard interval can be canceled in this way, it is possible to shorten, and in some cases eliminate, the guard interval. As a result, transmission efficiency can be improved.

Furthermore, according to this configuration, it is not necessary to find an impulse response when generating a replica, and the processing load for replica generation can be reduced.

A multipath interference canceling apparatus according to the present invention has a configuration wherein, inanabove-describedconfiguration, a plurality of processing block stages are provided comprising a demodulating section, a replica generating section, first subtraction section, time window processing section, and second subtraction section; wherein interference cancellation is further performed in the next stage on a signal in which interference due to a path exceeding the guard time was canceled in the preceding stage.

According to this configuration, interference cancellation processing is performed repeatedly, enabling interference to be canceled more surely from a received signal, and a further improvement in performance to be achieved.

A multipath interference canceling apparatus according to the present invention has a configuration comprising, in an above-described configuration, an impulse response estimation section that estimates the impulse response of a channel using a received signal, and a maximum delay detection section that detects the maximum delay based on an estimated impulse response; wherein the time window processing section sets a time window using the aforementioned maximum delay.

A multipath interference canceling apparatus according to the present invention has a configuration wherein, in an above-described configuration, the time window processing section sets a time window based on maximum delay information obtained using an impulse response of a reverse channel estimated on the communicating party side.

According to these configurations, a time window is set based on the maximum delay, and an interference component of a part in which interference components are concentrated is canceled, so that it is possible to prevent with good precision the occurrence of symbol distortion due to a part in which interference is generated by a path with a delay time longer than the guard interval, and to prevent degradation of performance.

A multipath interference canceling apparatus according to the present invention has a configuration wherein, in an above-described configuration, the time window processing section sets a time window that is attenuated exponentially or linearly.

According to this configuration, it is possible to prevent with good precision the occurrence of symbol distortion due to a part in which interference is generated by a path with a delay time longer than the guard interval, and to prevent degradation of performance.

A radio receiving apparatus according to the present invention is characterized by being equipped with a multipath interference canceling apparatus of an above-described configuration. According to this configuration, interference due to multipath transmission can be canceled independently of the length of the guard interval, and it is possible to perform high-performance multicarrier communications.

A multipath interference canceling method according to the present invention comprises a step of obtaining a demodulated signal by demodulating an information signal other than a guard interval of a multicarrier received signal in which a guard interval is inserted, a step of generating a replica of an immediately preceding information signal using the demodulated signal, a step of estimating the impulse response of a channel using the received signal, and a step of canceling interference due to a path exceeding the aforementioned guard interval in the aforementioned information signal using the aforementioned impulse response and the aforementioned replica.

According to this method, a part in which interference is generated in a subsequent information signal by a path with a delay time longer than the guard interval is found from a replica of the previous information signal and an impulse response, and that part is eliminated from the subsequent information signal, thereby making it possible to prevent the occurrence of distortion in an information signal, and to prevent degradation of performance.

A multipath interference canceling method according to the present invention comprises a step of obtaining a demodulated signal by demodulating an information signal other than a guard interval of a multicarrier received signal in which the aforementioned guard interval is inserted, a step of generating a replica of the aforementioned information signal using the aforementioned demodulated signal, a step of performing a first subtraction of the aforementioned replica from the aforementioned received signal, a step of performing time window processing on output of the aforementioned first subtraction, a step of performing a second subtraction of output of the aforementioned time window processing from the aforementioned received signal, and a step of canceling interference due to a path exceeding the aforementioned guard interval in the aforementioned information signal using the aforementioned impulse response and the aforementioned replica.

According to this method, a part in which interference is generated in a subsequent information signal by a path with a delay time longer than the guard interval is found from a replica of the previous information signal and an impulse response, and that part is eliminated from the subsequent information signal, thereby making it possible to prevent the occurrence of distortion in an information signal, and to prevent degradation of performance.

Also, since interference due to a path exceeding the guard interval can be canceled in this way, it is possible to shorten, and in some cases eliminate, the guardinterval. Asaresult, transmission efficiency can be improved.

Furthermore, according to this method, it is not necessary to find an impulse response when generating a replica, and the processing load for replica generation can be reduced.

A multipath interference canceling apparatus according to the present invention has a configuration comprising a Fourier transform processing section that obtains a signal of each subcarrier by performing Fourier transform processing on a multicarrier received signal, a detection section that executes detection processing using a channel estimate on the signal of each subcarrier obtained by the Fourier transform processing section, a decision section that obtains a digital signal by making a threshold decision for the signal level of the signal of each subcarrier following detection, a replica signal generating section that generates a replica signal for the signal of each subcarrier by executing the reverse of the processing of the detection section on a digital signal obtained by the decision section, a subtraction section that calculates an error value of corresponding subcarrier signals between a signal after Fourier transform processing obtained by the Fourier transform processing section and a replica signal, and a correction section that corrects a received signal prior to Fourier transformprocessing so that the error value is decreased; and wherein the aforementioned Fourier transform processing section is equipped with an FIR filter that uses a sampled received signal as variable gain and has as input a known Fourier transform coefficient, and a serial/parallel conversion circuit that performs serial/parallel conversion of FIR filter output; wherein the aforementioned correction section performs adaptive algorithm processing that decreases the aforementioned error value by adaptively correcting the value of a sampled received signal used as FIR filter variable gain.

According to this configuration, the Fourier transform processing section can be provided with a fundamental Fourier transform processing function of dividing a sampled received signal into signals of a plurality of subcarriers, and can also be provided with a function as a filter that cancels an interference component (hard decision error component) that appears as an error value between a replica signal and a signal after Fourier transform processing. Also, if FIR filter variable gain (a sampled received signal) of the Fourier transform processing section is corrected adaptively by means of adaptive algorithm processing by the correction section, it is possible to cancel effectively an interference component caused by the existence of a path with a delay time longer than the guard interval.

A multipath interference canceling apparatus according to the present invention has a configuration wherein a Fourier transform section comprises a first Fourier transform processing section that performs Fourier transform processing on an interference area signal of a multicarrier received signal, a second Fourier transform processing section that performs Fourier transform processing on a non-interference area signal of a multicarrier received signal, and an adding section that adds subcarrier signals formed by the first and second Fourier transform processing sections in corresponding subcarrier signals; and the aforementioned first Fourier transform processing section is equipped with an FIR filter that uses an aforementioned sampled received signal as variable gain and has as input a known Fourier transform coefficient, and a serial/parallel conversion circuit that performs serial/parallel conversion of FIR filter output; wherein the aforementioned correction section performs adaptive algorithm processing that decreases an error value by adaptively correcting the sampling value of the aforementioned interference area signal used as the aforementioned FIR filter variable gain in accordance with the aforementioned error value.

According to this configuration, the Fourier transform processing section is divided into a first and second Fourier transform section, and has a configuration whereby, of these, the first Fourier transform processing section that performs Fourier transform processing of an interference area signal is equipped with an FIR filter, and it is possible to correct only an interference area signal constituting the actual error base by performing adaptive filtering using adaptive algorithm processing only on an interference area signal, thereby enabling the amount of computational processing by the adaptive algorithm to be reduced. As a result, it is possible to cancel in a significantly shorter time and effectively an interference component caused by the existence of a path with a delay time longer than the guard interval.

A multipath interference canceling apparatus according to the present invention has a configuration wherein a correction section executes adaptive algorithm processing sequentially using an error value for the signal of each subcarrier.

According to this configuration, adaptive algorithm processing is performed so as to reduce error values while looking at those error values on a subcarrier-by-subcarrier basis, thereby making it possible to cancel effectively interference components of signals of all subcarriers.

A multipath interference canceling apparatus according to the present invention has a configuration wherein a correction section executes aforementioned adaptive algorithm processing using an order starting from the error value for a subcarrier signal of high reliability among subcarrier signals.

According to this configuration, adaptive algorithm processing is executed in order starting from a subcarrier of high reliability (such as a subcarrier with a high reception level or SIR, for example), thereby enabling convergence to be set in the correct direction in the early stages of the adaptive algorithm. As a result, the adaptive algorithm convergence characteristics can be improved, and it is possible to achieve a reduction in the number of adaptive algorithm repetitions and an improvement in the effectiveness of interference suppression.

A multipath interference canceling apparatus according to the present invention has a configuration wherein a correction section executes aforementioned adaptive algorithm processing using only an error value for a subcarrier signal whose reliability is greater than or equal to a predetermined threshold among subcarrier signals.

According to this configuration, adaptive algorithm processing is executed using only an error value of a subcarrier of high reliability (such as a subcarrier with a high reception level or SIR, for example), thereby enabling the adaptive algorithm convergence characteristics to be improved, and making it possible to achieve a reduction in the number of adaptive algorithm repetitions and an improvement in the effectiveness of interference suppression.

A multipath interference canceling apparatus according to the present invention has a configuration wherein a correction section executes aforementioned adaptive algorithm processing using only error values for signals of N subcarriers starting from those of highest reliability among subcarrier signals.

According to this configuration, in addition to enabling the achievement of a reduction in the number of adaptive algorithm repetitions and an improvement in the effectiveness of interference suppression, the amount of computation can be kept constant at all times.

A multipath interference canceling apparatus according to the present invention has a configuration wherein a correction section reduces the aforementioned threshold for determining reliability as the number of repetitions of the aforementioned adaptive algorithm processing increases.

According to this configuration, note is taken of the fact that, as the number of repetitions of adaptive algorithm processing increases, even a subcarrier signal that initially has low reliability can be expected to gradually improve in reliability through correction processing by the correction section, and by gradually lowering the threshold for determining reliability, the convergence properties of the adaptive algorithm can be improved significantly, and it is possible to achieve a further reduction in the number of adaptive algorithm repetitions and a further improvement in the effectiveness of interference suppression.

A multipath interference canceling apparatus according to the present invention has a configuration wherein a first Fourier transform section executes FIR filter processing and serial/parallel conversion processing on values of non-interference area signals as well as interference area signals, and a correction section adaptively corrects non-interference area signals as well as interference area signals.

According to this configuration, the effects of noise, etc., in a non-interference area can also be eliminated, thereby enabling data with a significantly lower error rate (digital data judged by a decision section) to be obtained.

A multipath interference canceling apparatus according to the present invention has a configuration wherein a replica signal generating section generates a normalized second replica signal in addition to generating a first replica signal for the signal of each subcarrier by executing the reverse of the processing of a detection section on a digital signal obtained by a decision section; a subtraction section, in addition to calculating a first error value of corresponding subcarrier signals between a signal after Fourier transform processing obtained by a Fourier transform processing section and a first replica signal, calculates a second error value of corresponding subcarrier signals between a signal after Fourier transform processing obtained by the Fourier transform processing section and a second replica signal; and a correction section performs adaptive algorithm processing that decreases the first and second difference values by adaptively correcting sampled received signal values used as FIR filter variable gain in accordance with the first and second error values.

According to this configuration, in addition to enabling interference components due to multipath transmission to be canceled by performing adaptive algorithm processing that decreases a first error value, it is also possible to eliminate the effects of frequency selective fading by performing adaptive algorithm processing that decreases a second error value.

A multipath interference canceling apparatus according to the present invention has a configuration wherein a Fourier transform section comprises a first Fourier transform processing section that performs Fourier transform processing on a first sampling signal of a multicarrier received signal, a second Fourier transform processing section that performs Fourier transform processing on a second sampling signal of a multicarrier received signal, and an adding section that adds subcarrier signals formed by the first and second Fourier transform processing sections in corresponding subcarrier signals; and the multipath interference canceling apparatus is further provided with a selection section that selects first and second sampling signals input to the first and second Fourier transform sections.

According to this configuration, a first sampling signal to be subject to interference cancellation using FIR filter processing and adaptive algorithm processing is selectedbymeans of a selection section, therebymaking it unnecessary to measure the delay time length necessary when interference and non-interference areas are divided. As a result, the configuration can be simplified accordingly, and it is possible to perform interference cancellation processing that is independent of the delay time length, thereby enabling interference canceling capability to be improved.

A multipath interference canceling apparatus according to the present invention has a configuration wherein a first Fourier transform processing section comprises an FIR filter that uses a first sampling signal as variable gain and has as input a known Fourier transform coefficient, and whose number of taps is varied in accordance with the number of said first sampling signals, and a serial/parallel conversion circuit that performs serial/parallel conversion of FIR filter output; wherein a correction section performs adaptive algorithm processing that decreases an error value by adaptively correcting the first sampling signal value used as FIR filter variable gain in accordance with the error value, and a selection section gradually increases the number of first sampling signals input to the first Fourier transform section.

According to this configuration, the number of first sampling signals input to the first Fourier transform section of which the FIR filter is a component is gradually increased by the selection section, thereby making it possible for interference components to be canceled sequentially in sampling signals for which there is a high possibility of multipath interference components being superimposed, and enabling multipath components to be eliminated with a small number of computations.

A multipath interference canceling apparatus according to the present invention has a configuration further comprising an error detection section that detects an error in a digital signal obtained by a decision section; wherein multipath interference cancellation processing of a multicarrier received signal subject to processing is terminated when errors cease to be detected by the error detection section.

According to this configuration, when gradually increasing the area for which FIR filter processing and adaptive algorithm processing are performed, FIR filter processing and adaptive algorithm processing for an OFDM symbol are terminated at the point at which there cease to be errors in the decoded data, thereby enabling the average amount of computation to be reduced. Also, since processing can be terminated at the point at which interference cancellation related adaptive algorithm processing has become optimal, it is possible to prevent a convergence value from diverging even a little from processing in which convergence at the optimal point is once achieved.

A multipath interference canceling apparatus according to the present invention has a configuration further comprising an error value calculation section that calculates the size of an error value obtained by a subtraction section; wherein multipath interference cancellation processing of a multicarrier received signal subject to processing is terminated when an error value ceases to vary from, or becomes larger than, the value when the previous adaptive algorithm processing was executed.

According to this configuration, when the area for which FIR filter processing and adaptive algorithm processing are performed is gradually increased, the timing at which FIR filter processing and adaptive algorithm processing are terminated is decided based on an error value, thereby enabling the average amount of computation to be reduced significantly. Also, since processing can be terminated at the point at which interference cancellation related adaptive algorithm processing has become optimal, it is possible to prevent a convergence value from diverging even a little from processing in which convergence at the optimal point is once achieved. Moreover, considering hybrid ARQ packet synthesis, it is possible to obtain decoded data with significantly better error rate characteristics.

A multipath interference canceling apparatus according to the present invention has a configuration wherein an error value calculation section calculates the norm of all subcarriers.

According to this configuration, the norm of all subcarriers is used as an error value, thereby making it possible to determine dependably and with a comparatively small amount of computation whether optimal decoded data has been obtained across all subcarriers of a multicarrier received signal.

A multipath interference canceling apparatus according to the present invention has a configuration further comprising an error detection section that detects an error in a digital signal obtained by a decision section, and an error value calculation section that calculates the size of an error value obtained by a subtraction section; wherein when errors cease to be detected by the error detection section, multipath interference cancellation processing of a multicarrier received signal subject to processing is terminated and the digital signal obtained by the decision section at that time is used as decoded data, and when errors are detected to the last by the error detection section, the digital signal obtained by the decision section when an error value ceases to vary from, or becomes larger than, the value when the previous adaptive algorithm processing was executed is used as decoded data.

According to this configuration, when the area for which FIR filter processing and adaptive algorithm processing are performed is gradually increased, when errors cease to be detected during processing, the decoded data at that time is used, and when errors cannot be eliminated by the end of processing, the decoded data of the point in time when the norm was smallest during processing is used, thereby making it possible to achieve both a reduction in the amount of computation and an improvement in error rate characteristics when hybrid ARQ is considered.

A multipath interference canceling method according to the present invention comprises a Fourier transform processing step of obtaining a signal of each subcarrier by performing Fourier transform processing on a multicarrier received signal, a detection step of executing detection processing using a channel estimate on the signal of each subcarrier obtained in the Fourier transform processing step, a decision step of obtaining a digital signal by making a threshold decision for the signal level of the signal of each subcarrier following detection, a replica signal generating step of generating a replica signal for the signal of each subcarrier by executing the reverse of the processing of the detection step on a digital signal obtained in the decision step, a subtraction step of calculating an error value of corresponding subcarrier signals between a signal after Fourier transform processing obtained in the Fourier transform processing step and a replica signal, and a correction step of correcting a received signal prior to Fourier transform processing so that the error value is decreased; wherein in the aforementioned Fourier transform processing step FIR filter computation is performed that uses a sampled received signal as variable gain andhas as input a known Fourier transform coefficient, and in the aforementioned correction step adaptive algorithm processing is performed that decreases the aforementioned error value by adaptively correcting the value of the aforementioned sampled received signal used as aforementioned FIR filter computation variable gain.

According to this method, in the Fourier transform processing step it is possible to perform fundamental Fourier transform processing that divides a sampled received signal into signals of a plurality of subcarriers, and to perform filter computation that cancels an interference component that appears as an error value between a replica signal and a signal after Fourier transform processing. Also, in the correction step, it is possible to cancel effectively an interference component caused by the existence of a path with a delay time longer than the guard interval by adaptively correcting variable gain of the Fourier transform processing step by means of adaptive algorithm processing.

As described above, according to the present invention the effects of interference due to a path with a long delay time that exceeds a guard interval are canceled, thereby enabling reception performance to be maintained even when the delay time of a delayed wave with respect to the advance wave exceeds the guard interval.

This application is based on Japanese Patent Application No.2001-258615 filed on August 28, 2001, Japanese Patent Application No. 2002-77102 filed on March 19, 2002, and Japanese Patent Application No.2002-138714 filed on May 14, 2002, entire contents of which are expressly incorporated by reference herein.

Industrial Applicability

The present invention is applicable to a multipath interference canceling apparatus and multipath interference canceling method that cancel an interference component based on multipathing of a multicarrier signal.

**Claims**

1.    A multipath interference canceling apparatus comprising:

> a demodulating section that obtains a demodulated signal by demodulating an information signal other than a guard interval of a multicarrier received signal in which said guard interval is inserted;
> a replica generating section that generates a replica of an immediately preceding information signal using said demodulated signal; and
> an impulse response estimation section that estimates an impulse response of a channel using said received signal;

> wherein interference due to a path exceeding said guard interval is canceled in said information signal using said impulse response and said replica.

2.    The multipath interference canceling apparatus according to claim 1, wherein said impulse response estimation section comprises:

> a channel estimation section that performs channel estimation for each multicarrier carrier; and
> an inverse Fourier transform processing section that performs inverse Fourier transform processing on a channel estimate estimated by said channel estimation section.

3.    A multipath interference canceling apparatus comprising:

> a demodulating section that obtains a demodulated signal by demodulating an information signal other than a guard interval of a multicarrier received signal in which said guard interval is inserted;
> a replica generating section that generates a replica of said information signal using said demodulated signal;
> a first subtraction section that subtracts said replica from said received signal;
> a time window processing section that performs time window processing on output of said first subtraction section; and
> a second subtraction section that subtracts output of said time window processing section from said received signal;

> wherein interference due to a path exceeding said guard interval is canceled in said information signal using said impulse response and said replica.

4.    The multipath interference canceling apparatus according to claim 3, provided with a plurality of processing block stages comprising said demodulating section, said replica generating section, said first subtraction section, said time window processing section, and said second subtraction section;
> wherein interference cancellation is further performed in a next stage on a signal in which interference due to a path exceeding a guard time was canceled in a preceding stage.

5.    The multipath interference canceling apparatus according to claim 4, further comprising:

> an impulse response estimation section that estimates an impulse response of a channel using a received signal; and
> a maximum delay detection section that detects a maximum delay based on an estimated impulse response;

> wherein said time window processing section sets a time window using said maximum delay.

6.    The multipath interference canceling apparatus according to claim 4, wherein said time window processing section sets a time window based on maximum delay information obtained using an impulse response of a reverse channel estimated on a communicating party side.

**7.** The multipath interference canceling apparatus according to claim 4, wherein said time window processing section sets a time window that is attenuated exponentially or linearly.

**8.** A radio receiving apparatus equipped with the multipath interference canceling apparatus according to claim 1.

**9.** A multipath interference canceling method comprising:

a step of obtaining a demodulated signal by demodulating an information signal other than a guard interval of a multicarrier received signal in which said guard interval is inserted;
a step of generating a replica of an immediately preceding information signal using said demodulated signal;
a step of estimating an impulse response of a channel using said received signal; and
a step of canceling interference due to a path exceeding said guard interval in said information signal using said impulse response and said replica.

**10.** A multipath interference canceling method comprising:

a step of obtaining a demodulated signal by demodulating an information signal other than a guard interval of a multicarrier received signal in which said guard interval is inserted;
a step of generating a replica of said information signal using said demodulated signal;
a step of performing a first subtraction of said replica from said received signal;
a step of performing time windowprocessing on output of said first subtraction;
a step of performing a second subtraction of output of said time window processing from said received signal; and
a step of canceling interference due to a path exceeding said guard interval in said information signal using said impulse response and said replica.

**11.** A multipath interference canceling apparatus comprising:

a Fourier transform processing section that obtains a signal of each subcarrier by performing Fourier transform processing on a multicarrier received signal;
a detection section that executes detection processing using a channel estimate on a signal of each subcarrier obtained by said Fourier transform processing section;
a decision section that obtains a digital signal by making a threshold decision for a signal level of a signal of each subcarrier following detection;
a replica signal generating section that generates a replica signal for a signal of each subcarrier by executing the reverse of processing of said detection section on a digital signal obtained by said decision section;
a subtraction section that calculates an error value of corresponding subcarrier signals between a signal after Fourier transform processing obtained by said Fourier transform processing section and said replica signal; and
a correction section that corrects a received signal prior to said Fourier transform processing so that said error value is decreased;
said Fourier transform processing section being equipped with:

an FIR filter that uses a sampled said received signal as variable gain and has as input a known Fourier transform coefficient; and
a serial/parallel conversion circuit that performs serial/parallel conversion of FIR filter output;

wherein said correction section performs adaptive algorithm processing that decreases said error value by adaptively correcting a value of said sampled received signal used as said FIR filter variable gain.

**12.** The multipath interference canceling apparatus according to claim 11, wherein said Fourier transform section comprises
a first Fourier transform processing section that performs Fourier transform processing on an interference area signal of said multicarrier received signal;
a second Fourier transform processing section that performs Fourier transform processing on a non-interference area signal of said multicarrier received signal; and

an adding section that adds subcarrier signals formed by said first and second Fourier transform processing sections in corresponding subcarrier signals;

said first Fourier transform processing section being equipped with:

an FIR filter that uses a sampled said received signal as variable gain and has as input a known Fourier transform coefficient; and

a serial/parallel conversion circuit that performs serial/parallel conversion of FIR filter output;

wherein said correction section performs adaptive algorithm processing that decreases said error value by adaptively correcting a sampling value of said interference area signal used as said FIR filter variable gain in accordance with said error value.

**13.** The multipath interference canceling apparatus according to claim 11, wherein said correction section executes said adaptive algorithm processing sequentially using said error value for a signal of each subcarrier.

**14.** The multipath interference canceling apparatus according to claim 11, wherein said correction section executes said adaptive algorithm processing using an order starting from an error value for a subcarrier signal of high reliability among subcarrier signals.

**15.** The multipath interference canceling apparatus according to claim 11, wherein said correction section executes said adaptive algorithm processing using only an error value for a subcarrier signal whose reliability is greater than or equal to a predetermined threshold among subcarrier signals.

**16.** The multipath interference canceling apparatus according to claim 11, wherein said correction section executes said adaptive algorithm processing using only error values for signals of N subcarriers starting from those of highest reliability among subcarrier signals.

**17.** The multipath interference canceling apparatus according to claim 15, wherein said correction section reduces said threshold for determining reliability as a number of repetitions of said adaptive algorithm processing increases.

**18.** The multipath interference canceling apparatus according to claim 12, wherein:

said first Fourier transform section executes FIR filter processing and serial/parallel conversion processing on said non-interference area signals as well as said interference area signals; and
said correction section adaptively corrects values of said non-interference area signals as well as said interference area signals.

**19.** The multipath interference canceling apparatus according to claim 11, wherein:

said replica signal generating section generates a normalized second replica signal in addition to generating a first replica signal for a signal of each subcarrier by executing the reverse of processing of said detection section on a digital signal obtained by said decision section;
said subtraction section, in addition to calculating a first error value of corresponding subcarrier signals between a signal after Fourier transform processing obtained by said Fourier transform processing section and said first replica signal, calculates a second error value of corresponding subcarrier signals between a signal after Fourier transform processing obtained by said Fourier transform processing section and said second replica signal; and
said correction section performs adaptive algorithm processing that decreases said first and second difference values by adaptively correcting said sampled received signal values used as said FIR filter variable gain in accordance with said first and second error values.

**20.** The multipath interference canceling apparatus according to claim 11, wherein said Fourier transform section comprises:

a first Fourier transform processing section that performs Fourier transform processing on a first sampling signal of said multicarrier received signal;
a second Fourier transform processing section that performs Fourier transform processing on a second sampling signal of said multicarrier received signal; and

an adding section that adds subcarrier signals formed by said first and second Fourier transform processing sections in corresponding subcarrier signals;

said multipath interference canceling apparatus being further provided with a selection section that selects said first and second sampling signals input to said first and second Fourier transform sections.

21. The multipath interference canceling apparatus according to claim 20, wherein:

said first Fourier transform processing section comprises:

an FIR filter that uses said first sampling signal as variable gain and has as input a known Fourier transform coefficient, and whose number of taps is varied in accordance with a number of said first sampling signals; and

a serial/parallel conversion circuit that performs serial/parallel conversion of FIR filter output;

said correction section performs adaptive algorithm processing that decreases said error value by adaptively correcting said first sampling signal value used as said FIR filter variable gain in accordance with said error value; and

said selection section gradually increases a number of said first sampling signals input to said first Fourier transform section.

22. The multipath interference canceling apparatus according to claim 21, further comprising an error detection section that detects an error in said digital signal obtained by said decision section;

wherein multipath interference cancellation processing of a multicarrier received signal subject to processing is terminated when errors cease to be detected by said error detection section.

23. The multipath interference canceling apparatus according to claim 21, further comprising an error value calculation section that calculates a size of said error value obtained by said subtraction section;

wherein multipath interference cancellation processing of a multicarrier received signal subject to processing is terminated when said error value ceases to vary from, or becomes larger than, a value when previous adaptive algorithm processing was executed.

24. The multipath interference canceling apparatus according to claim 23, wherein said error value calculation section calculates a norm of all subcarriers.

25. The multipath interference canceling apparatus according to claim 21, further comprising:

an error detection section that detects an error in said digital signal obtained by said decision section; and

an error value calculation section that calculates a size of said error value obtained by said subtraction section;

wherein when errors cease to be detected by said error detection section, multipath interference cancellation processing of amulticarrier received signal subject to processing is terminated and a digital signal obtained by said decision section at that time is used as decoded data; and when errors are detected to the last by said error detection section, a digital signal obtained by said decision section when said error value ceases to vary from, or becomes larger than, a value when previous adaptive algorithm processing was executed is used as decoded data.

26. A multipath interference canceling method comprising:

a Fourier transform processing step of obtaining a signal of each subcarrier by performing Fourier transform processing on a multicarrier received signal;

a detection step of executing detection processing using a channel estimate on a signal of each subcarrier obtained in said Fourier transform processing step;

a decision step of obtaining a digital signal by making a threshold decision for a signal level of a signal of each subcarrier following detection;

a replica signal generating step of generating a replica signal for a signal of each subcarrier by executing the reverse of processing of said detection step on a digital signal obtained in said decision step;

a subtraction step of calculating an error value of corresponding subcarrier signals between a signal after Fourier transform processing obtained in said Fourier transform processing step and said replica signal; and

a correction step of correcting a received signal prior to said Fourier transform processing so that said error value is decreased;

wherein in said Fourier transform processing step FIR filter computation is performed that uses a sampled said received signal as variable gain and has as input a known Fourier transform coefficient, and in said correction step adaptive algorithm processing is performed that decreases said error value by adaptively correcting a value of said sampled received signal used as said FIR filter computation variable gain.

FIG.1

(PRIOR ART)

EFFECTIVE SYMBOL
LENGTH (L)

GUARD INTERVAL

EFFECTIVE SYMBOL
LENGTH (L)

WAVEFORM COPIED

**FIG.2**

GI | EFFECTIVE SYMBOL — ADVANCE WAVE

GI | EFFECTIVE SYMBOL — DELAYED WAVE

GI

A(ADVANCE WAVE)

P

END OF PREVIOUS SYMBOL

B(DELAYED WAVE)

A+B

**FIG.3**

| | | | | FFT RANGE | |
|---|---|---|---|---|---|
| PATH #1 | GI | EFFECTIVE SYMBOL A | GI | EFFECTIVE SYMBOL B | |
| PATH #2 | GI | EFFECTIVE SYMBOL A | GI | EFFECTIVE SYMBOL B | |
| PATH #3 | | GI | EFFECTIVE SYMBOL A | GI | EFFECTIVE SYMBOL B |
| PATH #4 | | GI | EFFECTIVE SYMBOL A | GI | EFFECTIVE SYMBOL B |

X

Y

FIG.4

FIG.5

FIG.6

FIG.7

FIG.8

FIG.9

EFFECTIVE SYMBOL
LENGTH (L)

MAXIMUM DELAY

FIG.10

EFFECTIVE SYMBOL
LENGTH (L)

$I^{-\alpha x}$(WHERE $\alpha$ IS
A CONSTANT)

(a)

1

$1-\dfrac{X}{L}$

(b)

x=0                                              x=L

## FIG.11

EFFECTIVE SYMBOL
LENGTH (L)

MAXIMUM DELAY

## FIG.12

FIG.13

FIG.14

r(i,0) → | | → s(i,0) → | DEM | → d(i,0) → | DEC | → f(i,0)
r(i,1) → | | → s(i,1) → | DEM | → d(i,1) → | DEC | → f(i,1)
r(i,2) → | | → s(i,2) → | DEM | → d(i,2) → | DEC | → f(i,2)
r(i,3) → | FFT | → s(i,3) → | DEM | → d(i,3) → | DEC | → f(i,3)
r(i,4) → | | → s(i,4) → | DEM | → d(i,4) → | DEC | → f(i,4)
r(i,5) → | | → s(i,5) → | DEM | → d(i,5) → | DEC | → f(i,5)
r(i,6) → | | → s(i,6) → | DEM | → d(i,6) → | DEC | → f(i,6)
r(i,7) → | | → s(i,7) → | DEM | → d(i,7) → | DEC | → f(i,7)

1100    1101    1102

FIG.15

EP 1 422 850 A1

ADVANCE WAVE | GI(i-1) | DATA(i-1) | GI(i) | DATA(i) |

DELAYED WAVE 1 | GI(i-1) | DATA(i-1) | GI(i) | DATA(i) |

DELAYED WAVE 2 | GI(i-1) | DATA(i-1) | GI(i) | DATA(i) |

INTERFERENCE AREA

NON-INTERFERENCE AREA

FFT RANGE

FIG.16

FIG.17

EP 1 422 850 A1

FIG.18

EP 1 422 850 A1

## 1500 FIR FILTER

INPUT = w( m MOD 2, (int)(m/2) )

r(i,1) —→ ⊗ 1502

r(i,0) —→ ⊗ 1503

DELAY 1501

⊕ 1504

m=0···15

m=even 1505

m=odd

t(i,(int)(m/2) )

FIG.19

1600 MULTIPATH INTERFERENCE CANCELING APPARATUS

FIG.20

START OF RECEPTION PROCESSING — S0

PER-SUBCARRIER CHANNEL ESTIMATION FOR COHERENT DETECTION AND REPLICA GENERATION — S1

FFT OF NON-INTERFERENCE AREA ONLY OUTPUT $U(i,p)$ ($p = 0...7$) — S2

$m = 0$ — S3

$k = 0$ — S4

FIR FILTER COMPUTATION — S5

FILTER OUTPUT S/P CONVERSION OUTPUT $T(i,q,m)$ ($q = 0...7$) — S6

$V(i,k,m) = T(i,k,m)+U(i,k)$ — S7

COHERENT DETECTION OUTPUT $D(i,k,m)$ — S8

HARD DECISION OUTPUT $F(i,k,m)$ — S9

$k < 8$ ? — S10

Yes

$k = k+1$ — S11

No

$k = 0,\ m = m+1$ — S12

$m < Mmax$ ? — S13

No

Yes

REPLICA GENERATION, OUTPUT $X(i,k,m)$ — S14

$E(i,k,m) = X(i,k,m)-V(i,k,m)$ — S15

UPDATE $R(i,j,m)$ WITH ADAPTIVE ALGORITHM ($j = 0...n$) — S16

END OF RECEPTION PROCESSING — S17

FIG.21

START OF RECEPTION PROCESSING — S20

PER-SUBCARRIER CHANNEL ESTIMATION FOR COHERENT DETECTION AND REPLICA GENERATION — S1

RANK BY RECEPTION LEVEL
RNK(z) (z = 0...7) — S21

FFT OF NON-INTERFERENCE AREA ONLY
OUTPUT U(i,p) (p = 0...7) — S2

m = 0 — S3

y = 0 — S22

k = RNK(y) — S23

FIR FILTER COMPUTATION — S5

FILTER OUTPUT S/P CONVERSION
OUTPUT T(i,q,m) (q = 0...7) — S6

V(i,k,m) = T(i,k,m)+U(i,k) — S7

COHERENT DETECTION, OUTPUT D(i,k,m) — S8

HARD DECISION, OUTPUT F(i,k,m) — S9

Yes ← y<8? → No — S24

S25 — y = y+1

S26 — y = 0, m = m+1

m<Mmax? — S13
No / Yes

REPLICA GENERATION, OUTPUT X(i,k,m) — S14

E(i,k,m) = X(i,k,m)−V(i,k,m) — S15

UPDATE R(i,j,m) WITH ADAPTIVE ALGORITHM (j = 0...n) — S16

END OF RECEPTION PROCESSING — S17

FIG.22

EP 1 422 850 A1

START OF RECEPTION PROCESSING

**S1** PER-SUBCARRIER CHANNEL ESTIMATION FOR COHERENT DETECTION AND REPLICA GENERATION

**S2** FFT OF NON-INTERFERENCE AREA ONLY OUTPUT U(i,p) (p = 0...7)

**S3** m = 0

**S4** k = 0

**S5** FIR FILTER COMPUTATION

**S6** FILTER OUTPUT S/P CONVERSION OUTPUT T(i,q,m) (q = 0...7)

**S7** V(i,k,m) = T(i,k,m)+U(i,k)

**S8** COHERENT DETECTION OUTPUT D(i,k,m)

**S9** HARD DECISION OUTPUT F(i,k,m)

**S10** k<8 ?  Yes / No

**S11** k = k+1

**S12** k = 0, m = m+1

**S13** m<Mmax?  Yes / No

**S37** REL(k) = 1?  No / Yes

**S14** REPLICA GENERATION, OUTPUT X(i,k,m)

**S15** E(i,k,m) = X(i,k,m)−V(i,k,m)

**S16** UPDATE R(i,j,m) WITH ADAPTIVE ALGORITHM (j = 0...n)

**S30 / S31** z = 0

**S32** SUB-CARRIER z RECEPTION LEVEL > Lref?  Yes / No

**S33** REL(z)=1

**S34** REL(z)=0

**S35** z = z+1

**S36** z < 8 ?  Yes / No

**S17** END OF RECEPTION PROCESSING

FIG.23

49

S40 — START OF RECEPTION PROCESSING

S1 — PER-SUBCARRIER CHANNEL ESTIMATION FOR COHERENT DETECTION AND REPLICA GENERATION

S41 — RANK BY RECEPTION LEVEL RNK(z) (z = 0...7)

S42 — z = 0

S43 — RNK(z)<Nref? — Yes / No

S44 — REL(z)=1

S45 — REL(z)=0

S46 — z = z+1

S47 — z < 8 ? — Yes / No

S2 — FFT OF NON-INTERFERENCE AREA ONLY OUTPUT U(i,p) (p = 0...7)

S3 — m = 0

S4 — k = 0

A

FIG.24A

Ⓐ

S5
FIR FILTER COMPUTATION

S6
FILTER OUTPUT S/P CONVERSION
OUTPUT T(i,q,m) (q = 0...7)

S7
V(i,k,m) = T(i,k,m)+U(i,k)

S8
COHERENT DETECTION OUTPUT D(i,k,m)

S9
HARD DECISION OUTPUT F(i,k,m)

S10
Yes ◇ k<8? ◇ No

S11
k = k+1

S12
k = 0,  m = m+1

S13
◇ m<Mmax? ◇ No

Yes

S48
No ◇ REL(k) = 1? ◇

Yes

S14
REPLICA GENERATION, OUTPUT X(i,k,m)

S15
E(i,k,m) = X(i,k,m)−V(i,k,m)

S16
UPDATE R(i,j,m) WITH
ADAPTIVE ALGORITHM (j = 0...n)

S17
END OF RECEPTION PROCESSING

FIG.24B

51

START OF RECEPTION
PROCESSING — S50

S1

PER-SUBCARRIER CHANNEL ESTIMATION FOR
COHERENT DETECTION AND REPLICA GENERATION

z = 0 — S51

SUBCARRIER z
RECEPTION LEVEL >
Lref(0)? — S52

Yes — REL(z)=1 — S53

No — REL(z)=0 — S54

z = z+1 — S55

z < 8 ? — S56

Yes

No

FFT OF NON-INTERFERENCE AREA ONLY
OUTPUT U(i,p) (p = 0...7) — S2

m = 0 — S3

k = 0 — S4

B

FIR FILTER COMPUTATION — S5

FILTER OUTPUT S/P CONVERSION
OUTPUT T(i,q,m) (q = 0...7) — S6

V(i,k,m) = T(i,k,m)+U(i,k) — S7

COHERENT DETECTION OUTPUT D(i,k,m) — S8

HARD DECISION OUTPUT F(i,k,m) — S9

A

FIG.25A

(A)

S10
Yes ◇ k<8 ? No

S11
k = k+1

S12
k = 0, m = m+1

S57
z = 0

S58
Yes ◇ SUBCARRIER z RECEPTION LEVEL > Lref(m)? No

S59
REL(z)=1

S60
REL(z)=0

S61
z = z+1

S62
◇ z < 8 ? Yes

No

S13
◇ m<Mmax ? No

Yes

S63
No ← ◇ REL(k) = 1?
(B)

Yes

S14
REPLICA GENERATION, OUTPUT X(i,k,m)

S15
$E(i,k,m) = X(i,k,m) - V(i,k,m)$

S16
UPDATE R(i,j,m) WITH
ADAPTIVE ALGORITHM ( j = 0...n)

(B)

S17
END OF RECEPTION
PROCESSING

FIG.25B

| INTERFE-RENCE AREA | NON-INTERFERENCE AREA |
|---|---|

BLOCK 1
COMPUTATION

⟱

←→ UPDATE ←→ NON-UPDATE ←→

BLOCK 2
COMPUTATION

⟱

←→ NON-UPDATE ←→ UPDATE ←→ NON-UPDATE ←→

BLOCK 3
COMPUTATION

⟱

←→ NON-UPDATE ←→ UPDATE ←→ NON-UPDATE ←→

BLOCK 4
COMPUTATION

←→ NON-UPDATE ←→ UPDATE ←→

FIG.26

START OF RECEPTION PROCESSING — S70

| PER-SUBCARRIER CHANNEL ESTIMATION FOR COHERENT DETECTION AND REPLICA GENERATION | S1 |

| a = 0 | S71 |

| UPDATE AREA = a(n+1)...{a(n+1)+n} | S72 |

| FFT OF NON-UPDATE AREA ONLY OUTPUT U(i,p) (p = 0...7) | S73 |

| m = 0 | S3 |

| k = 0 | S4 |

| FIR FILTER COMPUTATION USING UPDATE AREA | S74 |

| FILTER OUTPUT S/P CONVERSION OUTPUT T(i,q,m) (q = 0...7) | S6 |

| V(i,k,m) = T(i,k,m)+U(i,k) | S7 |

| COHERENT DETECTION, OUTPUT D(i,k,m) | S8 |

| HARD DECISION, OUTPUT F(i,k,m) | S9 |

S10 — $k<8$? — Yes / No

S11 — k = k+1

S12 — k = 0,  m = m+1

S13 — $m<Mmax$? — Yes

No — S76 — a = a+1

S77 — $a < Bmax$? — Yes / No

| REPLICA GENERATION, OUTPUT X(i,k,m) | S14 |

| E(i,k,m) = X(i,k,m)−V(i,k,m) | S15 |

| UPDATE R(i,j,m) WITH ADAPTIVE ALGORITHM (UPDATE AREA ONLY) | S75 |

S78 — END OF RECEPTION PROCESSING

FIG.27

FROM END-POINT OF FIG.23  S80

m = 0  S3

k = 0  S4

FFT  S81

$V(i,k,m) = T(i,k,m)+U(i,k)$  S7

COHERENT DETECTION
OUTPUT D(i,k,m)  S8

HARD DECISION
OUTPUT F(i,k,m)  S9

S10

k<8 ?

Yes

No

S11

k = k+1

S12

k = 0, m = m+1

S13

m<Mmax ?

No

Yes

REPLICA GENERATION
OUTPUT X(i,k,m)  S14

REPLICA NORMALIZATION
$XX(i,j,k)=X(i,j,k)/|X(i,j,k)|$  S82

$E(i,k,m) = XX(i,k,m)-V(i,k,m)$  S83

UPDATE R(i,j,m) WITH ADAPTIVE
ALGORITHM (j = 0...7)  S84

END OF RECEPTION
PROCESSING  S17

FIG.28

2500 MULTIPATH INTERFERENCE CANCELING APPARATUS

FIG.29

START OF RECEPTION PROCESSING — S90

PER-SUBCARRIER CHANNEL ESTIMATION FOR COHERENT DETECTION AND REPLICA GENERATION — S1

a = 0 — S91

UPDATE AREA = {1...a} — S92

FFT OF NON-UPDATE AREA ONLY OUTPUT U(i,p) (p = 0...7) — S2

m = 0 — S3

k = 0 — S4

FIR FILTER COMPUTATION USING UPDATE AREA — S93

FILTER OUTPUT S/P CONVERSION OUTPUT T(i,q,m) (q = 0...7) — S6

V(i,k,m) = T(i,k,m)+U(i,k) — S7

COHERENT DETECTION, OUTPUT D(i,k,m) — S8

HARD DECISION, OUTPUT F(i,k,m) — S9

S10 — k<8 ?

Yes → S11 — k = k+1

No → S12 — k = 0, m = m+1

S13 — m<Mmax ?

No →

Yes →

S14 — REPLICA GENERATION, OUTPUT X(i,k,m)

S95 — a = a+1

S15 — E(i,k,m) = X(i,k,m)−V(i,k,m)

S94 — UPDATE R(i,j,m) WITH ADAPTIVE ALGORITHM (UPDATE AREA ONLY)

S96 — a < Bmax ?

Yes →

No →

S97 — END OF RECEPTION PROCESSING

FIG.30

|  | INTER-FERENCE AREA | NON-INTERFERENCE AREA |
|---|---|---|

BLOCK 1
COMPUTATION

UPDATE   NON-UPDATE

⇩⇩

BLOCK 2
COMPUTATION

UPDATE   NON-UPDATE

⇩⇩

BLOCK 3
COMPUTATION

UPDATE   NON-UPDATE

⇩⇩

BLOCK 4
COMPUTATION

UPDATE   NON-UPDATE

⇩⇩

BLOCK 5
COMPUTATION

UPDATE   NON-UPDATE

FIG.31

2800 MULTIPATH INTERFERENCE CANCELING APPARATUS

FIG.32

1606 REPLICA GENERATION

1605 DEC → f(i,0), f(i,1), f(i,2), f(i,3), f(i,4), f(i,5), f(i,6), f(i,7)

1604 DEM → d(i,0), d(i,1), d(i,2), d(i,3), d(i,4), d(i,5), d(i,6), d(i,7)

1607 + x(i,k) −

v(i,0), v(i,1), v(i,2), v(i,3), v(i,4), v(i,5), v(i,6), v(i,7)

1603

e(i,k)

1608 ADAPTIVE ALGORITHM

CORRECTION

1601 S/P CONVERSION

t(i,0), t(i,1), t(i,2), t(i,3), t(i,4), t(i,5), t(i,6), t(i,7)

u(i,0), u(i,1), u(i,2), u(i,3), u(i,4), u(i,5), u(i,6), u(i,7)

2504 FFT

t(i,k)

FIR FILTER

2502

FIXED INPUT
w( m MOD A, (int)(m/A) )

m=0···15

NUMBER OF TAPS (A)

2501 COUNTER

2503 SELECTION

r(i,0), r(i,1), r(i,2), r(i,3), r(i,4), r(i,5), r(i,6), r(i,7)

2801 ERROR DETECTION

2802 CONTROL

**FIG.33**

S100 START OF RECEPTION PROCESSING

S1 PER-SUBCARRIER CHANNEL ESTIMATION FOR COHERENT DETECTION AND REPLICA GENERATION

S91 $a = 0$

S92 UPDATE AREA = [1...a]

S2 FFT OF NON-UPDATE AREA ONLY OUTPUT $U(i,p)$ $(p = 0...7)$

S3 $m = 0$

S4 $k = 0$

S93 FIR FILTER COMPUTATION USING UPDATE AREA

S6 FILTER OUTPUT S/P CONVERSION OUTPUT $T(i,q,m)$ $(q = 0...7)$

S7 $V(i,k,m) = T(i,k,m) + U(i,k)$

S8 COHERENT DETECTION, OUTPUT $D(i,k,m)$

S9 HARD DECISION, OUTPUT $F(i,k,m)$

S10 $k < 8$ ? Yes / No

S11 $k = k+1$

S12 $k = 0,\ m = m+1$

S13 $m < Mmax$ ? No / Yes

S95 $a = a+1$

S14 REPLICA GENERATION, OUTPUT $X(i,k,m)$

S15 $E(i,k,m) = X(i,k,m) - V(i,k,m)$

S94 UPDATE $R(i,j,m)$ WITH ADAPTIVE ALGORITHM (UPDATE AREA ONLY)

S101 CRC OK ? Yes / No

S96 $a < Bmax$ ? Yes / No

S102 END OF RECEPTION PROCESSING

FIG.34

EP 1 422 850 A1

```
┌─────────────────────────────────────────────┐  S110
│        START OF RECEPTION PROCESSING          │⟋
└─────────────────────────────────────────────┘
                        │
┌─────────────────────────────────────────────┐  S1
│   PER-SUBCARRIER CHANNEL ESTIMATION          │⟋
│      FOR COHERENT DETECTION AND               │
│           REPLICA GENERATION                  │
└─────────────────────────────────────────────┘
                        │
┌─────────────────────────────────────────────┐  S111
│            a = 0    MNRME=∞                    │⟋
└─────────────────────────────────────────────┘
                        │                          ┌───┐
                        │◄─────────────────────────┤ C │
                        │                          └───┘
┌─────────────────────────────────────────────┐  S92
│            UPDATE AREA = {1...a}              │⟋
└─────────────────────────────────────────────┘
                        │
┌─────────────────────────────────────────────┐  S2
│       FFT OF NON-UPDATE AREA ONLY             │⟋
│         OUTPUT U(i,p) (p = 0...7)             │
└─────────────────────────────────────────────┘
                        │
┌─────────────────────────────────────────────┐  S112
│            m = 0 NRME=0                        │⟋
└─────────────────────────────────────────────┘
                        │
┌─────────────────────────────────────────────┐  S4
│                  k = 0                         │⟋
└─────────────────────────────────────────────┘
     ┌───┐              │
     │ B ├─────────────►│
     └───┘              │
┌─────────────────────────────────────────────┐  S93
│      FIR FILTER COMPUTATION USING             │⟋
│              UPDATE AREA                       │
└─────────────────────────────────────────────┘
                        │
┌─────────────────────────────────────────────┐  S6
│       FILTER OUTPUT S/P CONVERSION            │⟋
│        OUTPUT T(i,q,m) (q = 0...7)            │
└─────────────────────────────────────────────┘
                        │
┌─────────────────────────────────────────────┐  S7
│          V(i,k,m) = T(i,k,m)+U(i,k)           │⟋
└─────────────────────────────────────────────┘
                        │
┌─────────────────────────────────────────────┐  S8
│     COHERENT DETECTION, OUTPUT D(i,k,m)       │⟋
└─────────────────────────────────────────────┘
                        │
┌─────────────────────────────────────────────┐  S9
│      HARD DECISION, OUTPUT F(i,k,m)           │⟋
└─────────────────────────────────────────────┘
                        │
                     ┌───┐
                     │ A │
                     └───┘
```

FIG.35A

Ⓐ

S10
Yes ◇ k<8 ? No

S11
k = k+1

S12
k = 0, m = m+1

S13
◇ m<Mmax? No →

Yes

S14
REPLICA GENERATION, OUTPUT X(i,k,m)

S15
E(i,k,m) = X(i,k,m)−V(i,k,m)

S113
◇ k≠0 AND m=(Mmax−1)? No

Yes

S114
NRME=NRME+|E(i,k,m)|²

S94
UPDATE R(i,j,m) WITH ADAPTIVE ALGORITHM (UPDATE AREA ONLY)

Ⓑ

S95
a = a+1

S115
No ◇ MNRME< NRME

Yes

S116
MNRME= NRME

S96
◇ a < Bmax ? Yes →

No

Ⓒ

S117
END OF RECEPTION PROCESSING

FIG.35B

FIG.36

START OF RECEPTION PROCESSING — S120

PER-SUBCARRIER CHANNEL ESTIMATION FOR COHERENT DETECTION AND REPLICA GENERATION — S1

$a = 0 \quad MNRME = \infty$ — S111

C

UPDATE AREA = {1...a} — S92

FFT OF NON-UPDATE AREA ONLY OUTPUT $U(i,p)$ ($p = 0...7$) — S2

$m = 0 \quad NRME = 0$ — S112

$k = 0$ — S4

B

FIR FILTER COMPUTATION USING UPDATE AREA — S93

FILTER OUTPUT S/P CONVERSION OUTPUT $T(i,q,m)$ ($q = 0...7$) — S6

$V(i,k,m) = T(i,k,m) + U(i,k)$ — S7

COHERENT DETECTION, OUTPUT $D(i,k,m)$ — S8

HARD DECISION, OUTPUT $F(i,k,m)$ — S9

A

FIG.37A

A

S10 — k<8 ?
Yes / No

S11 — k = k+1

S12 — k = 0, m = m+1

S13 — m<Mmax ?
No / Yes

S95 — a = a+1

S14 — REPLICA GENERATION, OUTPUT X(i,k,m)

S15 — E(i,k,m) = X(i,k,m)−V(i,k,m)

S113 — k≠0 AND m=(Mmax−1) ?
No / Yes

S114 — NRME=NRME+|E(i,k,m)|²

S94 — UPDATE R(i,j,m) WITH ADAPTIVE ALGORITHM (UPDATE AREA ONLY)

B

S121 — CRC OK ?
Yes / No

S122 — NRME<MNRME
Yes / No

S123 — MNRME=NRME STORE DATA IN BUFFER

S124 — a < Bmax ?
No / Yes

C

S125 — INVOKE DATA STORED IN BUFFER

S126 — END OF RECEPTION PROCESSING

FIG.37B

# INTERNATIONAL SEARCH REPORT

| | International application No. |
|---|---|
| | PCT/JP02/08048 |

**A. CLASSIFICATION OF SUBJECT MATTER**
Int.Cl⁷ H04J11/00

According to International Patent Classification (IPC) or to both national classification and IPC

**B. FIELDS SEARCHED**

Minimum documentation searched (classification system followed by classification symbols)
Int.Cl⁷ H04J11/00

Documentation searched other than minimum documentation to the extent that such documents are included in the fields searched
Jitsuyo Shinan Koho         1926–1996   Toroku Jitsuyo Shinan Koho   1994–2002
Kokai Jitsuyo Shinan Koho   1971–2002   Jitsuyo Shinan Toroku Koho   1996–2002

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | Hirotaka MURAMATSU, Hiroshi HARADA, Shoji SHINODA, Masayuki FUJISE, "Pilot Keiretsu ga Sonyu sareta OFDM Ido Musen Denso Hoshiki ni okeru Pre-equalization-Ho ni Kansuru Ichi Kento", The Institute of Electronics, Information and Communication Engineers Gijutsu Kenkyu Hokoku, The Institute of Electronics, Information and Communication Engineers, Vol.98, No.537, 21 January, 1999 (21.01.99), pages 27 to 32 | 1,2,8,9 |
| X | JP 2001-94524 A  (Director General of Communications Research Lab.), 06 April, 2001 (06.04.01), Page 11, right column, line 46 to page 12, left column, line 7; Fig. 8 (Family: none) | 1,2,8,9 |

| ☒ Further documents are listed in the continuation of Box C. | ☐ See patent family annex. |
|---|---|

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 November, 2002 (06.11.02) | 19 November, 2002 (19.11.02) |

| Name and mailing address of the ISA/ | Authorized officer |
|---|---|
| Japanese Patent Office | |
| Facsimile No. | Telephone No. |

Form PCT/ISA/210 (second sheet) (July 1998)

68

**INTERNATIONAL SEARCH REPORT**

| International application No. |
|---|
| PCT/JP02/08048 |

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2000-134176 A  (Advanced Digital Television Broadcasting Laboratory), 12 May, 2000 (12.05.00), Fig. 1 (Family: none) | 2 |
| A | JP 5-75568 A  (France Telecom), 26 March, 1993 (26.03.93), Fig. 1 & EP 499560 A1          & AU 9210250 A & CA 2059455 A         & US 5307376 A & AU 655959 B          & EP 499560 B1 & DE 69228842 E        & JP 3044899 B2 & CA 2059455 C | 2 |
| A | JP 11-298434 A  (Advanced Digital Television Broadcasting Laboratory), 29 October, 1999 (29.10.99), Fig. 1 (Family: none) | 1-10 |
| A | JP 2000-269926 A  (Advanced Digital Television Broadcasting Laboratory), 29 September, 2000 (29.09.00), Fig. 1 & JP 3146196 B2 | 1-10 |
| A | JP 11-163822 A  (Advanced Digital Television Broadcasting Laboratory), 18 June, 1999 (18.06.99), Fig. 1 (Family: none) | 11-26 |
| A | JP 2000-286817 A  (Advanced Digital Television Broadcasting Laboratory), 13 October, 2000 (13.10.00), Fig. 17 (Family: none) | 11-26 |
| A | JP 8-340315 A  (Philips Electronics N.V.), 24 December, 1996 (24.12.96), Fig. 3 & EP 734133 A1          & FR 2732178 A1 & US 5796814 A          & IL 117578 A | 1-26 |

Form PCT/ISA/210 (continuation of second sheet) (July 1998)